# EUROPEAN PATENT APPLICATION

(11) **EP 4 366 109 A1**
(43) Date of publication of application: **08.05.2024**
(21) Application number: 22832045.3
(22) Date of filing: 28.06.2022
(51) Int. Cl.: H02J 3/32, H02J 7/00

(54) **ENERGY STORAGE DEVICE AND ENERGY STORAGE POWER SUPPLY THEREOF**

(30) Priority: 29.06.2021 CN 202110724976; 09.03.2022 CN 202210224372
(71) Applicant: Zhejiang Litheli Technology Co., Ltd., Ningbo, Zhejiang 315016 (CN)
(72) Inventor: LI, Bin, Ningbo, Zhejiang 315016 (CN); XU, Naiqian, Ningbo, Zhejiang 315016 (CN); KE, Hengzhao, Ningbo, Zhejiang 315016 (CN)
(74) Representative: Murgitroyd & Company
(86) International application number: PCT/CN2022/101914
(87) International publication number: WO 2023/274231

(57) **Abstract**

The present application provides an energy storage device and an energy storage power supply thereof. The energy storage device includes an energy storage power supply and charging apparatuses; the energy storage power supply includes a power supply body and an output portion, the output portion being in circuit connection to the power supply body to output electrical energy stored in the power supply body to the outside; the charging apparatuses are detachably connected to the output portion so as to be charged by the energy storage power supply; the charging apparatuses are configured to be connected to an electrical device to supply power to the electrical device; at least one of the charging apparatuses is replaced, after being depleted of power, with at least another of the charging apparatuses from the energy storage power supply so as to supply power to the electrical device, such that power is continuously supplied to the electrical device by the charging apparatus.

## Description

### TECHNICAL FIELD

The present application relates to the field of energy storage, and in particular to an energy storage device and an energy storage power supply thereof.

### BACKGROUND

The on/off-grid function of an energy storage system allows the energy storage system to realize AC and DC switching between an energy storage power supply and a power grid, and store electric energy in the on/off-grid function, so as to supply power to equipment in urgent need of electricity. It is worth mentioning that being on-grid means that power-using or power generation equipment is connected to the grid, and absorbs power from the grid or generates power to the grid. Being off-grid means that the power-using or power generation equipment is not connected to the grid, and electric energy is provided by the energy storage power supply.

Existing energy storage power supply is provided with a plurality of output interfaces for different devices to be connected to the energy storage power supply. After a user connects at least one device to the energy storage power supply through some data cables or charging cables, the energy storage power supply can supply power to the device. When the energy storage power supply supplies power to a plurality of devices, due to the limitations of the port type and number of output ports of the energy storage power supply and the matching capacity of the charging head type of the device, it is often necessary to connect the energy storage power supply to a plug strip to meet the needs of different devices for charging together. Therefore, the devices must be within a certain distance from the energy storage power supply, and the devices must be connected to the energy storage power supply through wires, making it impossible for the energy storage power supply to conveniently supply power to at least one device located beyond a certain distance. It is particularly worth mentioning that a variety of wires are kept between at least two devices and the energy storage power supply, which is prone to accidents of stumbling and pulling, and is not conducive to users' safe and convenient use of the devices and energy storage power supply.

In the existing outdoor working environment, when users need to use large-scale working equipment for operation, they often carry at least one diesel engine to supply energy to the large-scale working equipment. The method of fuel combustion for energy supply is low in utilization rate, and not energy-saving and environmentally friendly; in addition, diesel engines are large in size and very inconvenient to carry. When the diesel engine supplies energy to the working equipment, the diesel engine needs to be connected to the working equipment through a long wire, which is inconvenient for users to operate. For example, users are gradually replacing diesel engines with cleaner electric energy at present. Energy storage power supplies that can store electric energy are especially suitable for powering the working equipment in outdoor environments. When the energy storage power supply directly supplies power to some working equipment that needs to be moved, the mobile working equipment is connected to the energy storage power supply by wires, which will be inconvenient for the operation of the mobile working equipment.

Existing energy storage power supply is provided with a plurality of output interfaces for different devices to be connected to the energy storage power supply. After the user connects at least one device to the energy storage power supply through some data cables or charging cables, the energy storage power supply can supply power to the device. Therefore, the devices must be within a certain distance from the energy storage power supply, and the devices must be connected to the energy storage power supply through wires, making it impossible for the energy storage power supply to conveniently supply power to at least one device located beyond a certain distance. It is particularly worth mentioning that a variety of wires are kept between at least two devices and the energy storage power supply, which is prone to accidents of stumbling and pulling, and is not conducive to users' safe and convenient use of the devices and energy storage power supply.

### SUMMARY

An object of the present application is to provide an energy storage device and an energy storage power supply thereof, the energy storage power supply supplies power to at least two devices, and the devices are kept at intervals.

Another object of the present application is to provide an energy storage device and an energy storage power supply thereof, where the energy storage power supply can power at least two devices kept at a certain distance, solving the user's need for charging apparatuses at different positions.

Another object of the present application is to provide an energy storage device and an energy storage power supply thereof, where the energy storage device is suitable for outdoor environments, and when the user needs a mobile power supply, the energy storage device is equipped with at least two charging apparatuses that can charge devices.

Another object of the present application is to provide an energy storage device and an energy storage power supply thereof, where the energy storage device includes at least one charging apparatus and an energy storage power supply, where the energy storage power supply and the charging apparatus can be separated to supply power to at least two devices.

Another object of the present application is to provide an energy storage device and an energy storage power supply thereof, where the energy storage device includes an energy storage power supply and at least one charging apparatus, where the charging apparatus is powered by the energy storage power supply after it is disposed in the energy storage power supply.

Another object of the present application is to provide an energy storage device and an energy storage power supply thereof, where the energy storage power supply and the charging apparatus of the energy storage device can be separated to supply power to devices at different positions.

Another object of the present application is to provide an energy storage device and an energy storage power supply thereof, where the charging apparatus is powered by the energy storage power supply after it is disposed in the energy storage power supply in an accommodated manner.

Another object of the present application is to provide an energy storage device and an energy storage power supply thereof, where the charging apparatus can be charged by the energy storage power supply in a manner of being placed in the energy storage power supply, so that the charging apparatus and the energy storage power supply can be integrated as one, without the need to be kept in different positions.

Another object of the present application is to provide an energy storage device and an energy storage power supply thereof, where the charging apparatus is in circuit connection to the energy storage power supply in a manner of being supported by the energy storage power supply, and then the charging apparatus is powered by the energy storage power supply.

Another object of the present application is to provide an energy storage device and an energy storage power supply thereof, where, when the charging apparatus is in circuit connection to the energy storage power supply, the energy storage device prompts the user for circuit connection in a manner of light, making it simpler and clearer.

An object of the present application is to provide an energy storage device and an energy storage power supply thereof, where the energy storage power supply of the energy storage device supplies power to at least one electrical device in a manner of contact connection, thereby reducing the transmission of data cables.

Another object of the present application is to provide an energy storage device and an energy storage power supply thereof, where the energy storage power supply of the energy storage device can supply power to electrical devices in a cordless manner, which addresses the need of users for charging electrical devices at different positions.

Another object of the present application is to provide an energy storage device and an energy storage power supply thereof, where the energy storage power supply can be in circuit connection to electrical devices in an interfacing manner.

Another object of the present application is to provide an energy storage device and an energy storage power supply thereof, where the charging apparatus can be in circuit connection to electrical devices in an interfacing manner.

Another object of the present application is to provide an energy storage device and an energy storage power supply thereof, where the charging apparatus can continuously supply power to electrical devices in a manner of being replaced, so as to continuously supply power to electrical devices.

Another object of the present application is to provide an energy storage device and an energy storage power supply thereof, where the charging apparatus can be continuously powered by the energy storage power supply in a manner of being replaced.

Another object of the present application is to provide an energy storage device and an energy storage power supply thereof, where the charging apparatus and the energy storage power supply respectively supply power to at least two electrical devices while maintaining a certain distance from each other, so that at least two electrical devices are continuously powered.

Another object of the present application is to provide an energy storage device and an energy storage power supply thereof, where the charging apparatus includes a battery pack, a multi-pack battery pack that accommodates at least two battery packs, and a smart battery pack.

Another object of the present application is to provide an energy storage device and an energy storage power supply thereof, where, when the energy storage power supply is in circuit connection to an external power supply or mains supply, the charging apparatus is powered with priority.

Another object of the present application is to provide an energy storage device and an energy storage power supply thereof, where, when the energy storage power supply is in circuit connection to an external power supply or mains supply, an internal battery module of the energy storage power supply is powered with priority relative to the external charging apparatus.

Another object of the present application is to provide an energy storage device and an energy storage power supply thereof, where, when the energy storage power supply is in circuit connection to the charging apparatus, the charging apparatus stops supplying power to external electrical devices.

Another object of the present application is to provide an energy storage device and an energy storage power supply thereof, where the type of electrical devices can be motorized or non-motorized, where motorized devices include but are not limited to electric fans, cleaning devices, walking devices, garden devices, and fitness devices. Non-motorized devices include but are not limited to mobile devices, projection devices, communication devices providing local area networks, AC/DC outdoor air conditioners, drinking fountains, and speakers. It is worth mentioning that the motorized type can be implemented as motor drive.

Another object of the present application is to provide an energy storage device and an energy storage power supply thereof, where, through the circuit connection respectively between the energy storage power supply, charging apparatus and electrical devices in an interfacing manner, and the communication among the energy storage power supply, charging apparatus and electrical devices in an interfacing manner, data communication can be realized without wireless signals.

Another object of the present application is to provide an energy storage device and an energy storage power supply thereof, where, through the circuit connection respectively between the energy storage power supply, charging apparatus and electrical devices in an interfacing manner, and the communication among the energy storage power supply, charging apparatus and electrical devices in a pluggable manner, a power supply system can obtain at least one piece of power supply-related information or at least one piece of device-related information of each device of the power supply system.

Another object of the present application is to provide an energy storage device and an energy storage power supply thereof, where the power supply-related information includes but is not limited to an identification code, a model code, current, voltage, temperature, and supply power.

Another object of the present application is to provide an energy storage device and an energy storage power supply thereof, where the device-related information includes but is not limited to device status, device cell temperature, user instructions and other communication-related information; that is, the communication-related information of the power supply system or other systems can be communicated through direct connection of terminals.

Another object of the present application is to provide an energy storage device and an energy storage power supply thereof, where a charging apparatus input portion and a charging apparatus output portion of the charging apparatus are integrated into the same electrical connector to facilitate standardization of electrical connection, and simplify various charging and discharging connectors of electrical connectors.

Another object of the present application is to provide an energy storage device and an energy storage power supply thereof, the charging apparatus further includes a charging apparatus body and a charging interfacing portion. The charging apparatus body can identify whether the device being in circuit connection to its charging interfacing portion is the energy storage power supply or the electrical device, where the charging apparatus body determines whether to charge or discharge, so as to charge and discharge through the charging interfacing portion.

Other advantages and features of the present application are fully demonstrated by the following detailed description and can be realized by the combination of the means and devices specifically pointed out in the accompanying drawings.

Through an understanding of the following description and drawings, further objects and advantages of the present application will be apparent.

### BRIEF DESCRIPTION OF THE DRAWINGS

Fig. 1 is a three-dimensional diagram of an energy storage device in a state where an energy storage power supply and batteries thereof are separated according to a preferred embodiment of the present application, and a partial cross-section diagram of the energy storage power supply along H-H.
Fig. 2 is a three-dimensional diagram of the energy storage power supply and the batteries of the energy storage device according to the above-mentioned preferred embodiment of the present application, and a partial enlarged detail of an accommodating portion thereof.
Fig. 3 is a schematic diagram of a scenario in which the energy storage device according to the above-mentioned preferred embodiment of the present application is applied.
Fig. 4 is a three-dimensional diagram of replacing a charging apparatus of the energy storage device according to the above-mentioned preferred embodiment of the present application.
Fig. 5 is a schematic diagram of the application of a user access to the charging apparatus of the energy storage device according to the above-mentioned preferred embodiment of the present application.
Fig. 6 is a three-dimensional diagram of an energy storage device according to a preferred embodiment of the present application, and a partial cross-section diagram of an energy storage power supply thereof along M-M.
Fig. 7 is a three-dimensional diagram of the energy storage device in a state where the energy storage power supply and a battery pack thereof are separated according to the above-mentioned preferred embodiment of the present application, and a partial cross-section diagram of the energy storage power supply thereof along N-N.
Fig. 8 is a three-dimensional diagram and a schematic cross-section diagram of an energy storage power supply according to a preferred embodiment of the present application.
Fig. 9 is a three-dimensional diagram of an energy storage power supply according to a preferred embodiment of the present application, and a partial cross-section diagram and a partial enlarged diagram from another angle thereof.
Fig. 10 is a diagram of the energy storage device in a state where an accommodating portion thereof is in accommodated state according to the above-mentioned preferred embodiment of the present application, and a partial cross-section diagram thereof.
Fig. 11 is a three-dimensional diagram of an energy storage power supply according to a preferred embodiment of the present application.
Fig. 12 is a three-dimensional diagram of an energy storage power supply according to a preferred embodiment of the present application.
Fig. 13 is a three-dimensional diagram of an energy storage power supply used for battery charging according to a preferred embodiment of the present application.
Fig. 14 is another three-dimensional diagram of the energy storage power supply used for battery pack charging according to the above-mentioned preferred embodiment of the present application.
Fig. 15 is a diagram of an energy storage power supply according to a preferred embodiment of the present application.
Fig. 16A is a diagram of an energy storage system according to a preferred embodiment of the present application.
Fig. 16B is a diagram of an energy storage device according to the above-mentioned preferred embodiment of the present application and a partial cross-section diagram thereof.
Fig. 16C is a diagram of an energy storage power supply interfacing with a charging apparatus according to the above-mentioned preferred embodiment of the present application.
Fig. 17A is a three-dimensional diagram of the charging apparatus interfacing with an electrical device according to the above-mentioned preferred embodiment of the present application.
Fig. 17B is a diagram of the charging apparatus interfacing with the electrical device according to the above-mentioned preferred embodiment of the present application.
Fig. 18A is a three-dimensional diagram of the electrical connection of the electrical device and the energy storage power supply according to the above-mentioned preferred embodiment of the present application.
Fig. 18B is a diagram of a second electrical device interfacing with the charging apparatus according to the above-mentioned preferred embodiment of the present application.
Fig. 19A is a three-dimensional diagram of the energy storage power supply interfacing with the electrical device according to the above-mentioned preferred embodiment of the present application.
Fig. 19B is a diagram of the energy storage power supply interfacing with the electrical device according to the above-mentioned preferred embodiment of the present application.
Fig. 20A is a diagram of the circuit connection between the energy storage power supply and the electrical device according to the above-mentioned preferred embodiment of the present application and a cross-section diagram of the energy storage power supply along H-H.
Fig. 20B is a diagram of the circuit connection between the energy storage power supply and the electrical device according to the above-mentioned preferred embodiment of the present application.
Fig. 21A is a diagram of the charging apparatus interfacing with the energy storage power supply and the electrical device separately according to the above-mentioned preferred embodiment of the present application.
Fig. 21B is a diagram of the charging apparatus interfacing with the energy storage power supply according to the above-mentioned preferred embodiment of the present application.
Fig. 22A is a diagram of the circuit connection between an energy storage power supply and an electrical device according to a variant of the above-mentioned preferred embodiment of the present application.
Fig. 22B is a diagram of the circuit connection between an energy storage power supply and an electrical device according to a variant of the above-mentioned preferred embodiment of the present application.
Fig. 23A is a diagram of the energy storage power supply preferably supplying power to a charging apparatus when the same is connected to an external power supply according to the above-mentioned preferred embodiment of the present application.
Fig. 23B is a diagram of the charging priority of the energy storage power supply when the same is connected to an external power supply and the charging apparatus is connected to the energy storage power supply.

### DETAILED DESCRIPTION

The following description is provided to disclose the present application to enable those skilled in the art to practice the present application. The preferred embodiments in the following description are only examples, and those skilled in the art can think of other obvious modifications. The basic principles of the present application defined in the following description may be applied to other embodiments, variations, improvements, equivalents, and other technical solutions without departing from the spirit and scope of the present application.

Those skilled in the art shall understand that in the disclosure of the present application, the orientations or position relations indicated by such terms as "longitudinal", "lateral", "upper", "lower", "front", "back", "left", "right", "vertical", "horizontal", "top", "bottom", "inner", and "outer" are based on the orientations or position relations shown in the accompanying drawings, and are only for the convenience of describing the present application and simplifying the description, rather than indicating or implying the indicated devices or elements must have a particular orientation, be constructed and operated in a particular orientation, so the same cannot be construed as limitations of the present application.

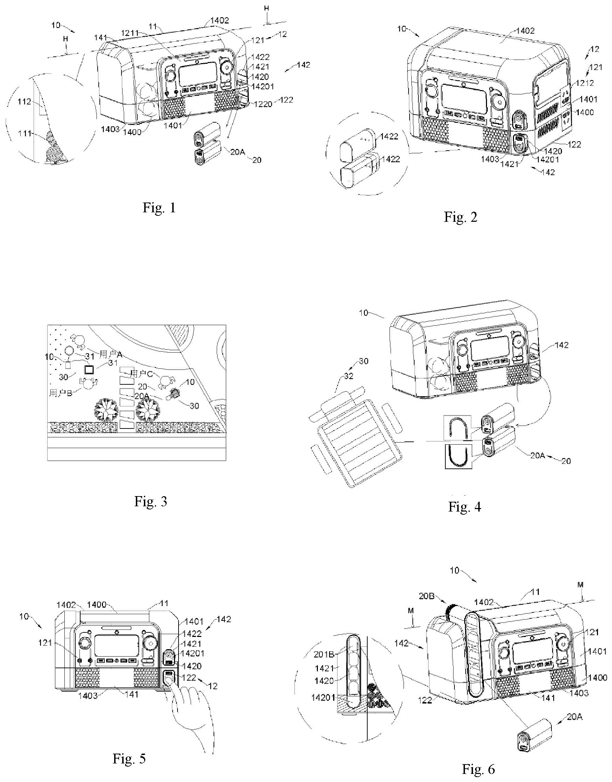

Referring to Fig. 1 and Fig. 2 in the accompanying drawings, an energy storage device according to a first preferred embodiment of the present application is disclosed and illustrated in detail, where the energy storage device includes an energy storage power supply 10 and at least one charging apparatus 20, and the charging apparatus 20 can be charged by the energy storage power supply 10. The charging apparatus 20 and the energy storage power supply 10 can be separated to supply power to an electrical device 30 respectively, so that at least two electrical devices 30 can also be powered by the energy storage power supply 10 when they are kept at a certain distance. Preferably, the charging apparatus 20 is charged in a manner in which it is inserted in the energy storage power supply 10, so that the charging apparatus 20 and the energy storage power supply 10 are assembled in an integrated manner. In other words, the charging apparatus 20 is powered by the energy storage power supply 10 in an accommodated manner.

Preferably, the number of charging apparatuses 20 is two or more, and the type of charging apparatus 20 is not subject to any restriction. The charging apparatus 20 is implemented as at least one battery pack 20A. The battery pack 20A can be detachably connected to the energy storage power supply 10 in an insertable manner. The battery pack 20A is detachably integrated after being charged by the energy storage power supply 10, so that a user can conveniently carry the energy storage device without storing them separately. Preferably, the number of battery packs 20A is two. It is worth mentioning that the number of battery packs 20A is not limited by the present application. The number of battery packs 20A can be 3, 4, 5, 6, 7, 8, 9, 10 or more.

When users bring energy storage devices to an external environment, for example, if at least two users can gather in an outdoor environment, and a user A and a user C engage in entertainment activities such as baking, listening to music, sports outdoors and the like, the energy storage devices can not only be used in large electrical devices 30, but also can be used in mobile devices, entertainment devices, cleaning devices, communication devices and other different electrical devices 30.

Existing energy storage power supplies require wires to be connected to other electrical devices 30, so the user's range of activities is limited at the same time. Therefore, users often use time-sharing for different types of activities to ensure the user's activities can be powered continuously.

Since people need to carry out a plurality of activities at the same time outdoors, and outdoor power is scarce, there are often situations where at least two devices need to be used at the same time. Users using existing energy storage power supplies can only use a power board to lay wires, so that different devices can use power at the same time within a certain distance. This limits the user's activity area to a certain extent and limits the user's activity types.

Referring to Fig. 3 in the accompanying drawings, the user A (user B) needs to use at least one cooking device 31 for cooking, and a user C needs to use an entertainment device 32 for entertainment. The cooking device 31 is directly powered by the energy storage power supply 10. The entertainment device 32 is powered by the battery pack 20A which is separate from the energy storage power supply 10. The entertainment device 32 and the cooking device 31 can be wirelessly kept at a certain distance to serve the users, so that various types of activities of the user can be conducted in combination without limiting the user's activity area and activity type.

Referring to Fig. 4 in the accompanying drawings, the entertainment device 32 of the user C consumes the power of the battery pack 20A after a period of time. The user C can directly insert the battery pack 20A into the energy storage power supply 31 and then take out another battery pack 20A to provide uninterrupted power supply to the entertainment device 32, thereby allowing the user C to continue using the entertainment device 32 without interrupting entertainment to recharge, and only one battery pack 20A is needed to provide battery life for the entertainment device 32, so that power is continuously supplied to the user in real time during the short outdoor time.

Referring to Fig. 1 in the accompanying drawings, the energy storage power supply 10 includes a power supply body 11, an output portion 12 and a power receiving portion, where the output portion 12 and the power receiving portion are arranged on the power supply body 11 respectively.

The power receiving portion is conductively connected to an AC/DC power supply, where the power supply body 11 is in circuit connection to the power receiving portion, the power supply body 11 receives an electric current of the AC/DC power supply and stores electricity, the output portion 12 is in circuit connection to the power supply body 11, and the magnitude and type of the electric current output by the power supply body 11 is determined according to the port type of the output portion 12.

The power receiving portion is conductively connected to an AC/DC power supply, where the power supply body 11 is in circuit connection to the power receiving portion, the power supply body 11 receives an electric current of the AC/DC power supply and stores electricity, the output portion 12 is in circuit connection to the power supply body 11, and the magnitude and type of the electric current output by the power supply body 11 is determined according to the port type of the output portion 12.

The power receiving portion includes at least one DC-DC module and an AC-DC module, and the DC-DC module can be in circuit connection to a DC power supply. The AC-DC module can be in circuit connection to an AC power supply. The AC-DC module includes at least one AC-DC rectifier converting alternating current (AC) into direct current (DC) and at least one AC receiving port being in circuit connection to the rectifier; the AC receiving port can be in circuit connection to the AC power supply, so that the AC-DC converter rectifies an external AC electric current into a DC electric current suitable for storage by the power supply body 11, so that the power supply body 11 stores electrical energy.

The DC-DC module includes at least one DC-DC converter that converts alternating current (DC) into direct current (DC) and at least one DC receiving terminal. The DC receiving terminal is in circuit connection to the DC-DC converter, and the DC receiving terminal can be in circuit connection to the DC power supply, so that the DC-DC converter rectifies an external DC electric current into a DC electric current suitable for storage by the power supply body 11, so that the power supply body 11 stores electrical energy.

The power supply body 11 includes a battery module 111 and a control module 112, where the control module 112 can be in circuit connection to the battery module 111, the output portion 12 and the power receiving portion, so that the control module 112 controls AC/DC conversion and electric current magnitude. The battery module 111 includes at least one inverter and at least one battery pack, and the battery pack receives a DC electric current delivered by the power receiving portion. When the battery pack needs to output an AC electric current, the battery pack is controlled by the control module 112 and converts the DC electric current stored in the battery pack into the AC electric current through the inversion of the inverter, and outputs it from the output portion 12.

The output portion 12 further includes at least one integrated output module 121 and a charging connection module 122, where the integrated output module 121 and the charging connection module 122 are in circuit connection to the power supply body 11 and the control module 112, respectively. Preferably, the charging connection module 122 is disposed close to a circumferential side surface 1401, so that the charging apparatus 20 kept close to the circumferential side surface 1401 is in circuit connection to the charging connection module 122. It is worth mentioning that the type of the charging connection module 122 is not subject to any restriction, and the charging connection module 122 can be implemented as a wired circuit connection or a wireless circuit connection.

In the present application, being close to the circumferential side surface 1401 refers to being arranged on the circumferential side surface 1401 of a housing 14 and/or being exposed to external space from the circumferential side surface 1401 of the housing 14. The charging apparatus 20 kept close to the circumferential side surface 1401 refers to being exposed to the external space from the circumferential side surface 1401 of the housing 14 and/or being arranged on the circumferential side surface 1401.

Referring to Fig. 1 in the accompanying drawings, in the first preferred embodiment of the present application, the integrated output module 121 of the output portion 12 is provided with a plurality of interfaces, where the integrated output module 121 can be adapted to a plurality of electrical devices 30 which are respectively connected to adapted ports to be charged by the energy storage power supply 10.

Preferably, the energy storage power supply 10 further includes a housing 14. Further, the housing 14 of the energy storage power supply 10 further includes a housing body 141 and an accommodating portion 142. The accommodating portion 142 is disposed in the housing body 141.

The accommodating portion 142 has an accommodating cavity 1420 and an accommodating opening 14201, where the accommodating portion 142 is disposed in the housing body 141, and at least one of the battery packs 20A can be placed into the accommodating cavity 1420 through the accommodating opening 14201.

Referring to Fig. 1, the accommodating portion 142 is accommodated in the housing body 141 in a manner of not protruding out of the housing body 141, that is, the accommodating portion 142 is installed in the housing body 141 and is exposed to a surface of the housing body 141. The accommodating opening 14201 is exposed to the housing body 141.

The charging connection module 122 is disposed in the accommodating portion 142, and when the battery pack 20A is accommodated in the accommodating portion 142, the battery pack 20A is in circuit connection to the charging connection module 122 in a direct contact manner.

Referring to Fig. 5, the battery pack 20A is placed into the accommodating portion 142 in a manner of being directly inserted, and the position of the battery pack 20A is limited by the accommodating portion 142. Further, the accommodating portion 142 includes an accommodating body 1421 and an ejection mechanism 1422. The ejection mechanism 1422 is preset in the accommodating body 1421, and when the ejection mechanism 1422 is triggered, the ejection mechanism 1422 locks or ejects the battery pack 20A.

Preferably, the ejection mechanism 1422 is disposed in the accommodating body 1421 toward the accommodating opening 14201, so that the ejection mechanism 1422 can be directly triggered after the battery pack 20A is inserted, and the ejection mechanism 1422 is triggered in a manner of being directly pushed by the battery pack 20A. In other words, the battery pack 20A can be locked or ejected in a manner of being directly pressed. The battery pack 20A drives the ejection mechanism 1422 to switch between a locked state and an ejected state in a manner of being squeezed.

Optionally, the number of accommodating bodies is selected from the group of 2, 3, 4, 5, 6, 7, 8, 9 or 10, and adjacent accommodating bodies 142 are kept apart.

Optionally, the ejection mechanism 1422 is disposed on a sidewall defined by the accommodating body 1421, and the sidewall of the accommodating body 1421 is formed in a radial direction in which the battery pack 20A is plugged into and unplugged from the accommodating body 1421. The type of ejection mechanism 1422 is not limited by the present application.

Further, the ejection mechanism 1422 is switched between an accommodating position and a release position. When the ejection mechanism 1422 is in the release position, the ejection mechanism 1422 does not protrude from the sidewall of the accommodating body 1421 to the accommodating cavity 1420; and when the ejection mechanism 1422 is in the accommodating position, the ejection mechanism 1422 protrudes from the sidewall of the accommodating body 1421 to the accommodating cavity 1420 to lock the battery pack 20A.

The housing body 141 has a circumferential side surface 1401 and a top surface 1402 and a bottom surface 1403 circumferentially connected by the circumferential side surface 1401, and the housing body 141 has a containing cavity 1400, where the top surface 1402 and the bottom surface 1403 are kept opposite to each other. The power supply body 11, the output portion 12 and the power receiving portion are installed in the containing cavity 1400 of the housing body 141.

Referring to the first preferred embodiment of the present application, the accommodating body 1421 is disposed on the circumferential side surface 1401 of the housing body 141, and the accommodating body 1421 is accommodated in a manner of not protruding from the circumferential side surface 1401 of the housing body 141. The accommodating opening 14201 of the accommodating body 1421 is disposed in a manner of being exposed to the surface of the housing body 141, so that the accommodating cavity 1420 can be directly connected to the external space and the battery pack 20A can be directly inserted into the accommodating cavity 1420.

It is worth mentioning that the containing cavity 1400 defined by the housing body 141 and the accommodating cavity 1420 defined by the accommodating portion 142 are kept apart, and the integrated output module 121 arranged in the accommodating cavity 1420 is in circuit connection to the control module 112.

The integrated output module 121 and the charging connection module 122 are facing an external environment from at least one of the top surface 1402, the bottom surface 1403, or the circumferential side surface 1401.

In the first preferred embodiment of the present application, the integrated output module 121 of the output portion 12 and the accommodating body 1421 are facing to the external environment in a manner of being on adjacent surfaces or the same surface of the housing 14. In other words, the integrated output module 121 of the output portion 12 and the accommodating body 1421 are kept in the housing 14 in a manner of being on the same side or forming a certain angle.

Preferably, the integrated output module 121 of the output portion 12 is distributed on two adjacent side surfaces of the circumferential side surface 1401. The charging connection module 122 and the integrated output module 121 are arranged in such a manner that one of them is kept in the same direction.

Referring to Fig. 1 in the accompanying drawings, in the first preferred embodiment of the present application, the integrated output module 121 and the charging connection module 122 are respectively arranged on the circumferential side surface 1401 of the housing to be in circuit connection to the external electrical device 30.

In a variant of the first preferred embodiment of the present application, the integrated output module 121 and the charging connection module 122 supply power to the external electrical device 30 through the top surface 1402 defined by the housing body 141.

The charging connection module 122 further includes a charging connection terminal, and the charging connection module 122 has an insertion slot 1220. The charging connection terminal of the charging connection module 122 is formed in the insertion slot 1220, and the battery pack 20A can be in circuit connection to the charging connection module 122 after it is inserted into the insertion slot 1220. The charging connection module 122 is conductively connected to the control module 112, so that the battery module 111 supplies power to the battery pack 20A of the charging connection module 122 under the control of the control module 112.

Referring to Fig. 1 and Fig. 2, the integrated output module 121 includes at least one DC output portion 1211 and an AC output portion 1212, where the DC output portion 1211 and the AC output portion 1212 are adjacently exposed to two side surfaces of the circumferential side surface 1401.

The charging connection module 122 and the AC output portion 1212 are kept on different planes. That is, the charging connection module 122 and the AC output portion 1212 are kept adjacent to each other.

In a preferred embodiment of the present application, the DC output portion 1211 and the charging connection module 122 are arranged on the same side.

Further, an output end of the DC output portion 1211 includes at least one of a USB interface, a TYPE C interface, a Lightning interface, or a cigarette lighter interface, which can be designed according to specific situations. The type of the DC output portion 1211 is not limited by the features and scope of the present application.

Referring to Fig. 1 and Fig. 2 in the accompanying drawings, the number of accommodating portions 142 is two, and the accommodating portions 142 are arranged along a height extension direction of the housing body 141. In other words, the number of battery packs 20A accommodated in the accommodating portion 142 is two or more. The arrangement direction of the two battery packs 20A extends along the height extension direction of the housing body 141, and the battery packs 20A are kept on the same side of the DC output portion 1211 of the integrated output module 121.

When the charging apparatus 20 is placed in the energy storage power supply 10, the energy storage power supply 10 at least displays in a light-emitting manner, so that when the charging apparatus 20 is in circuit connection to the energy storage power supply 10, the energy storage power supply 10 provides the user with interaction information on the circuit connection in a manner of light effect display to make interactions more vivid and colorful.

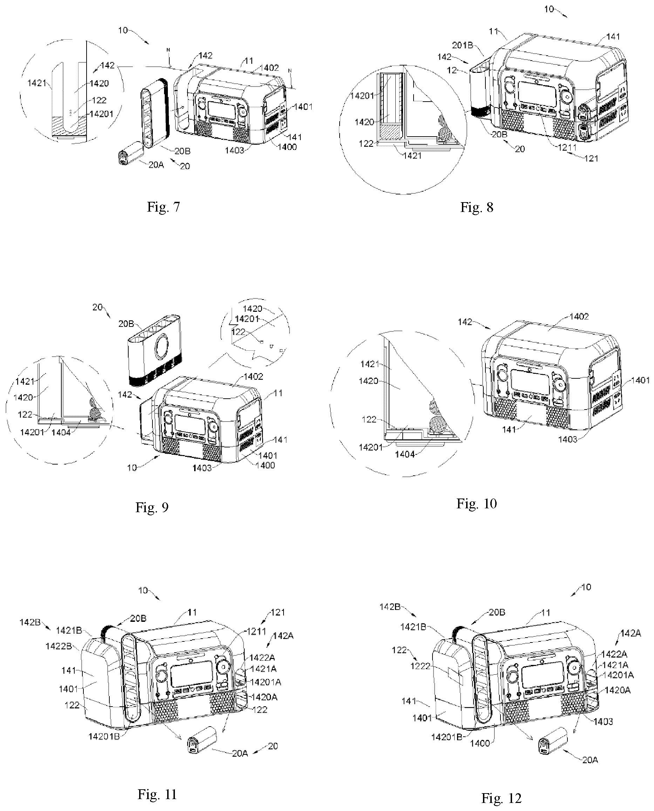

Referring to Fig. 6 and Fig. 7 in the accompanying drawings, an energy storage device of a second preferred embodiment of the present application is disclosed and illustrated in detail. The difference between this embodiment and the first preferred embodiment is that the charging apparatus 20 of the second preferred embodiment is implemented as at least one integrated package 20B, where the integrated package 20B is accommodated in the energy storage power supply 10. The energy storage device includes an energy storage power supply 10 and at least one charging apparatus 20, and the integrated package 20B is in wireless circuit connection to the energy storage power supply 10.

Referring to Fig. 6 in the accompanying drawings, the integrated package 20B can be taken out from the energy storage power supply 10 as a whole and used for other electrical devices 30, or only at least one of the battery packs 20A accommodated in the integrated package 20B can be taken out, so that it can be used separately for the electrical device 30, while the integrated package 20B can be accommodated in the energy storage power supply 10. The integrated package 20B provided with at least two battery packs 20A not only increases the electrical capacity of the energy storage device, but also increases the number of electrical devices 30 which can be powered at the same time, making it easier for users to use different electrical devices 30 at the same time.

Preferably, the integrated package 20B is pluggably installed in the energy storage power supply 10, so that the integrated package 20B can be charged by the energy storage power supply 10 without wire connection. In addition, by integrating the integrated package 20B and the energy storage power supply 10, the integrated package 20B can be accommodated more integrally to reduce users' accommodation troubles.

In the first preferred embodiment of the present application, the integrated package 20B is integrally accommodated in the energy storage power supply 10. Referring to Fig. 6 in the accompanying drawings, the integrated package 20B can be taken out from the energy storage power supply 10 as a whole and used for other electrical devices 30, or only at least one of the battery packs 20A accommodated in the integrated package 20B can be taken out, so that it can be used separately for the electrical device 30, while the integrated package 20B can be accommodated in the energy storage power supply 10.

The integrated package 20B includes at least two battery packages 20A. Referring to Fig. 6 in the accompanying drawings, the integrated package 20B includes at least four battery packs 20A. The battery packs 20A can be accommodated and powered by the integrated package 20B, and the battery packs 20A are exposed to the accommodating opening 14201, so that the integrated package 20B can be taken out from the energy storage power supply 10 as a whole and used for other electrical devices 30, or only at least one of the battery packs 20A accommodated in the integrated package 20B can be taken out, so that it can be used separately for the electrical device 30, while the integrated package 20B can always be accommodated in the energy storage power supply 10, which increases the number of different electrical devices 30 that the user can use separately at the same time, increases the number of different activities that the user can carry out within a limited period of time, and facilitates the user to carry out activities.

Referring to Fig. 6 in the accompanying drawings, the accommodating opening 14201 of the accommodating portion 142 is kept on the circumferential side surface 1401 of the housing body 141 in a manner of being connected to the external space on both sides, so that the user can access the integrated package 20B in a manner of directly inserting it downward, which is more convenient and efficient. Further, the battery packs 20A are plugged into and unplugged from the integrated package 20B in a direction perpendicular to the housing body 141. In other words, a battery pack opening 201B of the integrated package 20B is oriented in the same direction as the accommodating opening 14201.

More preferably, when the integrated package 20B is accommodated toward the circumferential side surface 1401 of the housing body 141, the battery packs 20A is displayed to the outside in a manner of being exposed to the accommodating opening 14201. That is to say, the user can directly take out the battery packs 20A accommodated in the integrated package 20B of the energy storage power supply 10 without taking out the entire integrated package 20B.

Referring to Fig. 7 in the accompanying drawings, the charging connection module 122 is disposed in a circumferential direction of the accommodating portion 142, and the charging connection module 122 is kept toward the accommodating opening 14201 defined by the accommodating portion 142. When the integrated package 20B is inserted into the accommodating cavity 1420 through the accommodating opening 14201 of the accommodating portion 142, the integrated package 20B is connected to the charging connection module 122 in a manner of being directly pushed.

Referring to Fig. 8 to Fig. 10 in the accompanying drawings, an energy storage device of a third preferred embodiment of the present application is disclosed and illustrated in detail, and the difference from the second preferred embodiment is that the accommodating portion 142 is disposed on a side of the circumferential side surface 1401 of the housing body 141. The accommodating body 1421 of the accommodating portion 142 can be closed or opened, and when there is no need to accommodate the integrated package 20B, the accommodating body 1421 closes the accommodating cavity 1420 in a manner of being covered in the housing body 141. When there is no need to accommodate the integrated package 20B, the accommodating body 1421 is pushed to define the accommodating cavity 1420, and the integrated package 20B can be accommodated in the accommodating cavity 1420 of the accommodating body 1421 and in circuit connection to the charging connection module 122.

Preferably, the charging connection module 122 is disposed close to the bottom surface 1403 so that the charging apparatus 20 supported by the bottom surface 1403 of the housing 14 is in circuit connection to the charging connection module 122. In other words, the charging apparatus 20 accommodated in the accommodating portion 142 of the housing 14 is in circuit connection to the charging connection module 122 kept on the bottom surface 1403. It is worth mentioning that the type of the charging connection module 122 is not subject to any restriction, and the charging connection module 122 can be implemented as a wired circuit connection or a wireless circuit connection.

In the present application, being close to the bottom surface 1403 refers to being arranged on the bottom surface 1403 of the housing 14 and/or extending from the bottom surface 1403 of the housing 14 to the top surface 1402.

Preferably, the accommodating portion 142 closes the accommodating cavity 1420 in a manner of being directly pushed and covered in the housing body 141. In addition, the accommodating portion 142 can also be implemented as a flexible organizer/storage piece, which can be stored by simply rolling it up or squeezing it, and the present application is not subject to any restriction in this regard.

The accommodating portion 142 is switched between an accommodating position and a storage position. When the accommodating portion 142 is in the accommodating position, the accommodating portion 142 and the housing body 141 jointly define the accommodating cavity 1420, where the integrated package 20B can be placed in the accommodating cavity 1420 and then accommodated and powered by the energy storage power supply 10; when the accommodating portion 142 is in the storage position, the accommodating portion 142 is pushed straight to the circumferential side surface 1401 of the housing body 141, and then the accommodating portion 142 is accommodated.

Referring to Fig. 9 in the accompanying drawings, the housing body 141 further has a storage slot 1404, where the storage slot 1404 is formed on the circumferential side surface 1401 of the housing body 141, and the storage slot 1404 and the containing cavity 1400 of the housing body 141 are kept apart. The accommodating portion 142 is accommodated in the storage slot 1404 in a pushable manner.

The axial cross-section of the storage slot 1404 is "L" shaped. The accommodating body 142 can be completely accommodated in the storage slot 1404 so that the accommodating portion 142 jointly defines one side surface of the circumferential side surface 1401 in a manner of not protruding out of the housing body 141.

The accommodating portion 142 includes a first end surface and a second end surface extending perpendicularly from the first end surface. The first end surface and the second end surface are defined as an "L" shape, so that the accommodating portion 142 and one side surface of the circumferential side surface 1401 of the housing body 141 jointly defines an accommodating cavity 1420, and the accommodating cavity 1420 can be closed or opened depending on the positional relationship between the accommodating portion 142 and the housing body 141.

Referring to Fig. 8 in the accompanying drawings, the accommodating portion 142 is connected to the external space in the axial direction and the circumferential direction by opening the accommodating opening 14201. The charging connection module 122 is kept in the accommodating portion 142 in a manner of being formed upward toward the axial direction of the housing body 141, the integrated package 20B is preferably plugged into and unplugged from the accommodating portion 142 from the circumferential side surface 1401 of the housing body 141, and connected to the charging connection module 122 in a directly pluggable manner.

The battery pack opening 201B of the integrated package 20B is plugged and unplugged from the integrated package 20B along the circumferential direction of the housing body 141. The battery pack opening 201B of the integrated package 20B is formed on the circumferential side surface 1401 of the housing body 141. In other words, the integrated package 20B is accessed from the direction of the circumferential side surface 1401 of the housing body 141. The plugging-unplugging direction of the integrated package 20B and the DC output portion 1211 of the integrated output module 121 are kept coplanar.

Referring to Fig. 11 in the accompanying drawings, an energy storage device according to a fourth preferred embodiment of the present application is disclosed and illustrated in detail, where the energy storage device includes at least one energy storage power supply 10 and at least two charging apparatuses 20, and two charging apparatuses 20 are respectively accommodated and powered by the energy storage power supply 10.

Preferably, the charging apparatuses 20 are respectively charged by the energy storage power supply 10 in a manner of being inserted.

Referring to Fig. 11 in the accompanying drawings, the accommodating portion 142 further includes a first accommodating portion 142A and a second accommodating portion 142B, where the first accommodating portion 142A and the second accommodating portion 142B are respectively arranged in the housing body 141, the two charging apparatuses 20 are respectively accommodated and powered in the first accommodating portion 142A and the second accommodating portion 142B, where the two charging apparatuses 20 are implemented as the battery pack 20A and the integrated package 20B, where the battery pack 20A is accommodated and powered in the first accommodating portion 142A and the integrated package 20B is accommodated and powered in the second accommodating portion 142B.

The battery pack 20A is in circuit connection in a manner of being accommodated in the first accommodating portion 142A. The integrated package 20B is in circuit connection in a manner of being accommodated in the second accommodating portion 142B.

The first accommodating portion 142A has a first accommodating cavity 1420A and a first accommodating opening 14201A, where the first accommodating portion 142A is disposed in the housing body 141, and at least one of the battery packs 20A can be placed into the first accommodating cavity 1420A through the first accommodating opening 14201A.

The second accommodating portion 142B has a second accommodating cavity 1420B and a second accommodating opening 14201B, where the second accommodating portion 142B is disposed in the housing body 141, and at least one of the integrated packages 20B can be placed into the second accommodating cavity 1420B through the second accommodating opening 14201B.

Preferably, the first accommodating portion 142A and the second accommodating portion 142B are kept apart in the housing body 141. That is, the battery pack 20A and the integrated package 20B are arranged apart in the housing body 141.

Referring to Fig. 11 in the accompanying drawings, the first accommodating portion 142A and the DC output portion 1211 of the integrated output module 121 are kept coplanar on the circumferential side surface 1401. As illustrated in Fig. 2, the second accommodating portion 142B and the AC output portion 1212 are kept opposite on the circumferential side surface 1401.

Optionally, the first accommodating portion 142A and the second accommodating portion 142B can be arranged on the top surface 1402 of the housing body 141. Here, the distribution positions of the first accommodating portion 142A and the second accommodating portion 142B are not limited by the present application, which should be understood and known by those skilled in the art.

Referring to Fig. 11 in the accompanying drawings, the first accommodating portion 142A is accommodated on the circumferential side surface 1401 of the housing body 141 in a manner of not protruding out of the housing body 141, that is, the first accommodating portion 142A is installed in the housing body 141 and is exposed to the surface of the housing body 141. The first accommodating opening 14201A is exposed to the housing body 141.

One of the charging connection modules 122 is disposed in the first accommodating portion 142A, and when the battery pack 20A is accommodated in the first accommodating portion 142A, the battery pack 20A is in circuit connection to the charging connection module 122 in a direct contact manner.

Preferably, the battery pack 20A is placed into the first accommodating portion 142A in a manner of being directly inserted, and the position of the battery pack 20A is limited by the first accommodating portion 142A. Further, the first accommodating portion 142A includes a first accommodating body 1421A and a first ejection mechanism 1422A. The first ejection mechanism 1422A is preset in the first accommodating body 1421A, and when the first ejection mechanism 1422A is triggered, the first ejection mechanism 1422A locks or ejects the battery pack 20A.

Preferably, the first ejection mechanism 1422A is disposed in the first accommodating body 1421A toward the first accommodating opening 14201A, so that the first ejection mechanism 1422A can be directly triggered after the battery pack 20A is inserted, and the first ejection mechanism 1422A is triggered in a manner of being directly pushed by the battery pack 20A. In other words, the battery pack 20A can be locked or ejected in a manner of being directly pressed. The integrated package 20B drives the first ejection mechanism 1422A to switch between a locked state and an ejected state in a manner of being squeezed.

Referring to Fig. 11 in the accompanying drawings, the second accommodating portion 142B is accommodated on the circumferential side surface 1401 of the housing body 141 in a manner of being arranged at a side of the housing body 141. The second accommodating opening 14201B is exposed to the housing body 141.

One of the charging connection modules 122 is disposed in the second accommodating portion 142B, and when the integrated package 20B is accommodated in the second accommodating portion 142B, the integrated package 20B is in circuit connection to the charging connection module 122 in a direct contact manner.

Preferably, the integrated package 20B is placed into the second accommodating portion 142B in a manner of being directly inserted, and the position of the integrated package 20B is limited by the second accommodating portion 142B. Further, the second accommodating portion 142B includes a second accommodating body 1421B and a second ejection mechanism 1422B. The second ejection mechanism 1422B is preset in the second accommodating body 1421A, and when the second ejection mechanism 1422B is triggered, the second ejection mechanism 1422B locks or ejects the integrated package 20B.

Preferably, the ejection mechanism 1422A is disposed in the second accommodating body 1421B toward the second accommodating opening 14201B, so that the second ejection mechanism 1422B can be directly triggered after the integrated package 20B is inserted, and the second ejection mechanism 1422B is triggered in a manner of being directly pushed by the integrated package 20B. In other words, the integrated package 20B can be locked or ejected in a manner of being directly pressed. The integrated package 20B drives the second ejection mechanism 1422B to switch between a locked state and an ejected state in a manner of being squeezed.

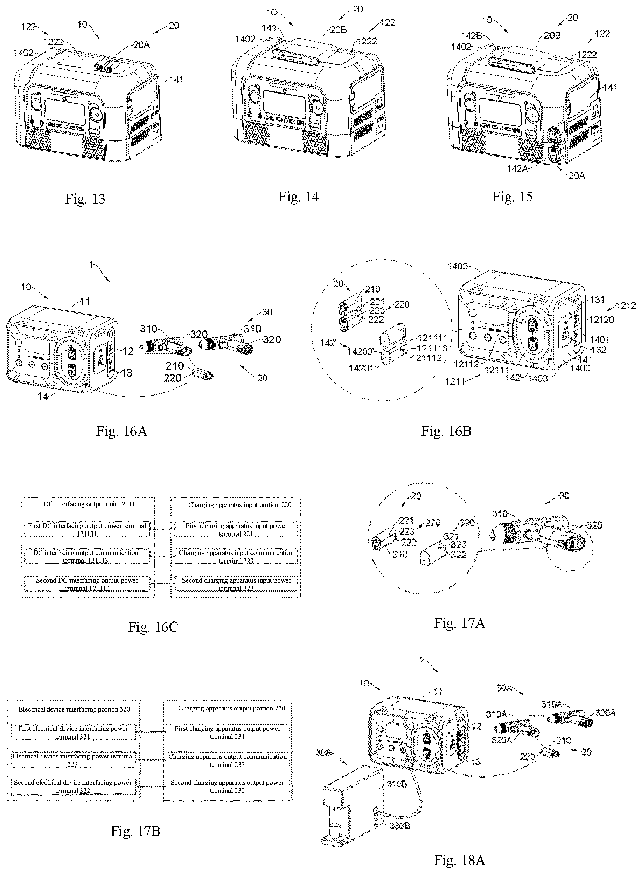

Referring to Fig. 13 in the accompanying drawings, an energy storage device of a fifth preferred embodiment of the present application is disclosed and illustrated in detail. The difference between this embodiment and the fourth preferred embodiment is that the charging connection module 122 includes at least one wireless charging connection terminal 1222 and at least one wired charging connection terminal, where the wireless charging connection terminal 1222 is disposed in the second accommodating body 1421B, and the wired charging connection terminal is disposed in the first accommodating body 1421A. The integrated package 20B can be inserted into the second accommodating body 1421B and then wirelessly charged by the wireless charging connection terminal 1222.

Optionally, the number of wireless charging connection terminals 1222 is selected from the group of 2, 3, 4, 5, 6, 7, 8, 9 or 10. The number of wired charging connection terminals is selected from the group of 2, 3, 4, 5, 6, 7, 8, 9 or 10.

At least two wireless charging connection terminals 1222 are kept apart, and two wireless charging terminals 1222 wirelessly output electric current respectively. The number of wireless charging connection terminals 1222 is selected from the group of 1, 2, 3, 4, 5, 6, 7, 8, 9 or 10.

The wireless charging connection terminal 1222 is disposed in a radial direction, so that when the charging apparatus 20 approaches the wireless charging connection terminal 1222 in the radial direction, the wireless charging connection terminal 1222 is induced to output the electric current.

It is worth mentioning that the second accommodating body 1421B can accommodate at least two integrated packages 20B. Further, the number of wireless charging connection terminals 1222 is two or more. The wireless charging connection terminals 1222 are respectively in circuit connection to at least one integrated package 20B. In other words, two or more integrated packages 20B can be in wireless circuit connection at the same time in a manner of being accommodated.

It is worth mentioning that the wireless charging connection terminal 1222 is implemented as electromagnetic induction, magnetic resonance, and microwave electrical transmission, which can be understood and known by those skilled in the art.

It is worth mentioning that the wireless charging connection terminal 1222 of the charging connection module 122 can wirelessly supply power to the charging apparatus 20 and/or other electrical devices, such as mobile devices and the like, and those devices can be powered by the charging connection module 122 without a wire. The user only needs to place the electrical device on the top surface 140 of the housing body 141, and the electrical device can be charged by the charging connection module 122 of the energy storage power supply 10, which makes charging more convenient.

It is worth mentioning that the charging connection module 122 includes multiple wireless charging connection terminals 1222, and the charging apparatus 20 and/or other electrical devices placed in any positions of the accommodating portion 142 can be directly electrically connected without further adjustment of the fitting position to complete the matching, which improves the user experience.

The wireless charging connection terminal 1222 is disposed in a radial direction, so that when the charging apparatus 20 approaches the wireless charging connection terminal in the radial direction, the wireless charging connection terminal is induced to output the electric current.

Preferably, the electrical device is implemented as a mobile device, such as a mobile phone, iPad, iPod, game console, AR device, VR device, communication device (e.g., a gateway) providing a local area network, thermal insulation device and the like, and the present application is not subject to any restriction.

It is worth mentioning that other devices can also be powered by the energy storage power supply 10, the charging apparatus 20 and electrical devices are specific examples of the devices, and those skilled in the art should understand and know that the type of devices is not subject to any restriction of the present application. Further, devices are powered by the energy storage power supply 10. In this preferred embodiment, at least one of the devices is wirelessly powered by the energy storage power supply 10. At least one of the devices is powered by the energy storage power supply 10 through a contact connection. Specifically, the electrical device and/or the charging apparatus 20 are wirelessly powered by the energy storage power supply 10. The battery pack 20A of the charging apparatus 20 is wirelessly powered by the energy storage power supply 10.

The wired charging connection terminal is implemented as at least one of a USB interface, a TYPE C interface, or a Lightning interface, which can be designed according to specific situations, and the present application is not subject to any restriction in this regard.

Referring to Fig. 13 and Fig. 14 in the accompanying drawings, an energy storage device of a sixth preferred embodiment of the present application is disclosed and illustrated in detail. The difference between this embodiment and the fifth preferred embodiment is that the charging apparatus 20 is powered and accommodated in a manner of being supported by the housing body 141.

To be more specific, the charging apparatus 20 is accommodated on the top surface 1402 of the housing body 141. Both the battery pack 20A and the integrated package 20B are accommodated on the top surface 1402 of the housing 141 so that the user can more intuitively find the charging apparatus 20 that can be powered separately. In other words, the first accommodating portion 142A and the second accommodating portion 142B of the above preferred embodiment are co-planarly accommodated on the top surface 1402 of the energy storage power supply 10.

Preferably, the charging connection module 122 is disposed close to the top surface 1402 so that the charging apparatus 20 kept close to the top surface 1402 is in circuit connection to the charging connection module 122. It is worth mentioning that the type of the charging connection module 122 is not subject to any restriction, and the charging connection module 122 can be implemented as a wired circuit connection or a wireless circuit connection.

In the present application, being close to the top surface 1402 refers to being arranged on the top surface 1402 of the housing 14 and/or being exposed to the external space from the top surface 1402 of the housing 14. The charging apparatus 20 kept close to the top surface 1402 refers to being exposed to the external space from the top surface 1402 of the housing 14 and/or being supported in a manner of being arranged on the top surface 1402.

Optionally, in another variant embodiment, the accommodating portion 142 is disposed on the top surface 1402 of the housing 14 and is exposed to the external space from the top surface 1402 of the housing 14, where the charging apparatus 20 can be accommodated in the accommodating portion 142, and is exposed to the external space from the top surface 1402 of the housing 14, so that the charging apparatus 20 accommodated in the accommodating portion 142 is accommodated.

Referring to Fig. 13 and Fig. 14 in the accompanying drawings, the charging connection module 122 includes at least one wireless charging connection terminal 1222, and the charging mode of the charging connection module 122 and the battery pack 20A is implemented as wireless charging, so that the integrated package 20B and/or the battery pack 20A can be powered by the charging connection module 122 without wire connection. The user only needs to place the integrated package 20B and/or the battery pack 20A on the top surface 1402 of the housing body 141, the integrated package 20B and/or the battery pack 20A can be powered by the charging connection module 122 of the energy storage power supply 10, which makes charging more convenient.

Optionally, the number of wireless charging connection terminals 1222 is selected from the group of 2, 3, 4, 5, 6, 7, 8, 9 or 10.

The wireless charging connection terminal 1222 of the charging connection module 122 can wirelessly supply power to other electrical devices, such as mobile devices and the like, and those devices can be powered by the charging connection module 122 without a wire. The user only needs to place the electrical device on the top surface 140 of the housing body 141, and the electrical device can be charged by the charging connection module 122 of the energy storage power supply 10, which makes charging more convenient.

It is worth mentioning that the number of wireless charging connection terminals 1222 of the charging connection module 122 is two or more. In another variant embodiment, two wireless charging connection terminals 1222 are kept apart, and the two wireless charging connection terminals 1222 are kept on different planes, that is, each wireless charging connection terminal 1222 inductively supplies power to at least one of the charging apparatus 20 or the electrical device, and the types of the electrical devices and the charging apparatuses 20 depend on the specific situations.

Preferably, the electrical device is implemented as a mobile device, such as a mobile phone, iPad, iPod, game console, AR device, VR device, communication device (e.g., a gateway) providing a local area network, thermal insulation device, etc., and the present application is not subject to any restriction.

Optionally, in another variant embodiment, the accommodating portion 142 is disposed on the top surface 1402 of the housing 14 and is exposed to the external space from the top surface 1402 of the housing 14, where the electrical device can be accommodated in the accommodating portion 142, and is exposed to the external space from the top surface 1402 of the housing 14, so that the electrical device accommodated in the accommodating portion 142 is accommodated.

In a variant of the above-mentioned preferred embodiment of the present application, the energy storage device is disclosed and illustrated in detail, and the charging connection module 122 includes at least two wireless charging connection terminals 1222. Any one of the wireless charging connection terminals 1222 is powered inductively. When the electrical device is placed on any one charging connection module 1222 and the wireless charging connection terminal 1222 is powered on, the electrical device placed on the corresponding wireless charging connection terminal 1222 is powered on inductively, so that it is unnecessary to adjust the position of the electrical device placed on the top surface 2402 of the energy storage power supply 10, which makes charging more convenient.

The wireless charging connection terminals 1222 are arranged co-planarly, and at least one of the wireless charging connection terminals 1222 is induced to output the electric current, so that the charging apparatus 20 is wirelessly charged when the charging apparatus 20 is placed close to any one wireless charging connection terminal 1222. The number of wireless charging connection terminals 1222 is selected from a group of 2, 3, 4, 5, 6, 7, 8, 9 or 10.

The wireless charging connection terminal 1222 is disposed in an axial direction, so that when the electrical device and/or the charging apparatus 20 is axially supported by the housing 14 and approaches the wireless charging connection terminal 1222, the wireless charging connection terminal 1222 is induced to output the electric current.

When two electrical devices are placed on the wireless charging connection module 122 at the same time, each electrical device can be placed correspondingly at the position of one wireless charging connection terminal 1222, and the wireless charging connection terminal 1222 corresponding to each electrical device is powered on to supply power to the electrical device.

Preferably, the electrical device is implemented as a mobile device, such as a mobile phone, iPad, iPod, game console, AR device, VR device, communication device (e.g., a gateway) providing a local area network, thermal insulation device, etc., and the present application is not subject to any restriction.

When two electrical devices are placed on the charging connection module 122, the types of the two electrical devices are not subject to any restriction. The electrical device can be implemented as at least one of a mobile phone, iPad, iPod, game console, AR device, VR device, communication device (e.g., gateway) providing a local area network, or thermal insulation device.

In another variant embodiment of the present application, the charging connection module 122 includes at least two wireless charging connection terminals 1222, one of the wireless charging connection terminals 1222 is disposed in the second accommodating body 1421B, and the other wireless charging connection terminal 1222 is disposed on the top surface 1402 of the energy storage power supply 10, so that two wireless charging connection terminals 1222 supply power to different devices respectively. Preferably, the integrated package 20B can be inserted into the second accommodating body 1421B and then wirelessly charged by the wireless charging connection terminal 1222. The electrical device is placed on the top surface 1042 of the energy storage power supply 10 and is charged wirelessly.

Referring to Fig. 15 in the accompanying drawings, an energy storage device according to another preferred embodiment of the present application is disclosed. The housing body 141 of the energy storage power supply 10 is provided with a first accommodating portion 142A for accommodating the battery pack 20A. The battery pack 20A is at least partially accommodated in the first accommodating portion 142A. The battery pack 20A is connected cordlessly to the energy storage power supply 10 to be charged by the energy storage power supply 10.

The second accommodating portion 142B is disposed on the top surface 1402, and the integrated package 20B is placed in the second accommodating portion 142B. The wireless charging connection terminal 1222 of the energy storage power supply 10 is disposed on the top surface 1402, and the integrated package 20B of the charging apparatus 20 is placed in the second accommodating portion 142B to be connected to the wireless charging connection terminal 1222, and the integrated package 20B is wirelessly charged by the energy storage power supply 10 through the wireless charging connection terminal 1222.

In other words, the top surface 1402 is provided with the wireless charging connection terminal 1222, and the integrated package 20B is placed on the top surface 1402 and wirelessly connected to the wireless charging connection terminal 1222 so as to be charged by the energy storage power supply 10. The battery pack 20A accommodated in the integrated package 20B is charged by the energy storage power supply 10 through the integrated package 20B.

The battery pack 20A accommodated in the integrated package 20B and the battery pack 20A directly connected to the energy storage power supply 10 may be battery packs of the same type and specification, or may be battery packs of different types and specifications.

Referring to Fig. 16A to Fig. 23B in the accompanying drawings, a power supply system according to another preferred embodiment of the present application is disclosed and illustrated in detail, where the power supply system includes at least one power supply device 1 and at least one electrical device 30. The power supply device 1 further includes at least one energy storage power supply 10 and at least one charging apparatus 20, where the charging apparatus 20 is powered by the energy storage power supply 10 in a manner of being arranged in the energy storage power supply 10. The charging apparatus 20 can supply power to the electrical device 30 in an interfacing manner.

Further, the number of charging apparatuses 20 is not subject to any restriction in the present application, and the number of charging apparatuses 20 is selected from the group of 2, 3, 4, 5, 6, 7, 8, 9 or 10. Preferably, a plurality of charging apparatuses 20 can be respectively powered by the energy storage power supply 10 in a manner of being accommodated.

The charging apparatus 20 is powered by the energy storage power supply 10 in a cordless manner. When the charging apparatus 20 is taken out from the energy storage power supply 10, the charging apparatus 20 can be in circuit connection to the electrical device 30 in a cordless manner. In addition, the energy storage power supply 10 can supply power to other electrical devices 30, so that the energy storage power supply 10 and the charging apparatus 20 can be kept at a certain distance to supply power to different electrical devices 30. In other words, the electrical devices 30 further includes a second electrical device 30B and a first electrical device 30A, where the second electrical device 30B is powered by the energy storage power supply 10, and the first electrical device 30A can be cordlessly powered by the charging apparatus 20, where the types of the second electrical device 30B and the first electrical device 30A are not subject to restrictions of the present application, and the present application is not subject to any restriction in this regard.

Preferably, the charging apparatus 20 includes, but is not limited to, a battery pack 20A, an integrated package 20B that accommodates at least two battery packs, and a smart battery pack.

Alternatively, the above-mentioned charging apparatus 20 may also include an electrical device 30 with built-in batteries, such as lamps with built-in batteries, speakers with built-in batteries or the like; when such charging apparatus 20 is connected to the energy storage power supply 10 in a cordless manner, it can be powered by the energy storage power supply 10. When the charging apparatus 20 is taken out from the energy storage power supply 10, it can provide electric energy through its built-in batteries to satisfy the user's use.

The energy storage power supply 10 can receive an AC electric current or a DC electric current, the energy storage power supply can store electric power, and the energy storage power supply 10 can output the DC electric current or the AC electric current.

Referring to Fig. 16A in the accompanying drawings, the energy storage power supply 10 supplies power to at least one electrical device 30, and the charging apparatus 10 cordlessly supplies power to at least one electrical device 30, so as to simultaneously supply power to at least two electrical devices 30, so that various types of activities of the user can be conducted in combination without limiting the user's activity area and activity type.

A user A needs to use at least one second electrical device 30B, and a user B needs to use the first electrical device 30A. The second electrical device 30B is directly powered by the energy storage power supply 10. The first electrical device 30A is powered by the charging apparatus 20 which is separate from the energy storage power supply 10. The first electrical device 30A and the second electrical device 30B may be kept at a certain distance. Furthermore, it is worth mentioning that the energy storage power supply 10, the charging apparatus 20 and other electrical devices 30 of the power supply system of this preferred embodiment are in circuit connection to each other in a cordless manner, so that the electrical environment of the electrical devices 30 is free of wires, making it freer, cleaner and safer. The charging apparatus 20 and the energy storage power supply 10 are in circuit connection to each other in a manner of interfacing contact, so that it is more convenient and space-saving in the process of handling, storage, and transportation. In addition, reducing wires can also prevent snagging in space to prevent problems such as snagging and sudden detachment from the connection port. Further, the charging apparatus 20 is charged by the energy storage power supply 10 in an interfacing manner; after being charged by the energy storage power supply 10, the charging apparatus 20 can be taken out and used for other electrical devices 30, so that the charging apparatus 20 can supply power to the electrical device 30 in a manner of being replaced; the charging apparatus 20 is in circuit connection to the electrical device 30 to continuously power the electrical device 30, so that the charging apparatus 20 can supply power to the electrical device 30 in a manner of following the electrical device 30.

Preferably, the charging apparatus 20 is implemented as the battery pack 20A, where at least two battery packs 20A are placed in the energy storage power supply 10, and two battery packs 20A are accommodated and powered in a separate manner, where the two battery packs 20A are arranged along the height direction of the energy storage power supply 10, and the battery packs 20A are plugged and unplugged from a circumferential side surface 1401 of the energy storage power supply 10.

Preferably, the number of electrical devices 30 is one or more, and the type of electrical devices 30 is not subject to any restriction. The electrical devices 30 include but are not limited to smart devices, outdoor electrical devices, and cooking devices, such as mobile devices, electric fans, lamps, projectors, communication devices providing local area networks, drinking fountains, sound devices, cleaning devices, DC/AC outdoor air conditioning, AC/DC outdoor air conditioning, walking devices, garden devices, and fitness devices.

The electrical devices 30 can be divided into motorized devices and non-motorized devices, where the motorized devices include but are not limited to electric fans, cleaning devices, walking devices, garden devices, and fitness devices. The non-motorized devices include but are not limited to mobile devices, projection devices, communication devices providing local area networks, AC/DC outdoor air conditioners, drinking fountains, and speakers. It is worth mentioning that the motorized type can be implemented as motor drive.

The mobile devices include but are not limited to mobile phones, iPads, iPods, game consoles, AR devices, and VR devices.

Optionally, the communication devices that provide a local area network include but are not limited to relay signal amplifiers and wireless routers.

The cleaning devices include but are not limited to hand vacuums, floor scrubbers, sweeping robots, and vacuum cleaners.

Optionally, the walking devices include but are not limited to strollers, electric cars, battery cars, balance cars, electric scooters, and other types of toys.

The garden devices include but are not limited to snow blowers, air blowers, pruners, and sprinklers.

Optionally, the fitness devices include but are not limited to treadmills, rehabilitation devices, and stretching devices.

It is worth mentioning that when the number of charging apparatuses 20 is two or more, and the type of charging apparatus 20 is not subject to any restriction, at least one of the charging apparatuses 20 is in circuit connection to the energy storage power supply 10 in a cordless manner, and at least another charging apparatus 20 is in circuit connection to the energy storage power supply 10 in a manner that is not subject to any restriction. That is to say, at least another charging apparatus 20 may be in circuit connection to the energy storage power supply 10 in a cordless manner.

Preferably, the charging apparatus 20 is in circuit connection to the energy storage power supply 10 in a manner of being interfaced with the energy storage power supply 10.

Further, the charging apparatus 20 is placed in the energy storage power supply 10. Preferably, the charging apparatus 20 can or cannot be discharged at the same time when being powered by the energy storage power supply 10, and the present application is not subject to any restriction in this regard.

The charging apparatus 20 is in circuit connection to the energy storage power supply 10 in a manner of contact connection. At least one cordless connection output end of the energy storage power supply 10 is externally arranged, so that when the charging apparatus 20 is placed on the energy storage power supply 10, the charging apparatus 20 is in circuit connection to the energy storage power supply 10 in a manner of contact connection.

More preferably, at least one cordless connection output end of the energy storage power supply 10 is internally arranged, so that the charging apparatuses 20 are powered by the energy storage power supply 10 after being respectively placed in an interfacing portion 142 of the energy storage power supply 10.

In another variant embodiment, at least one other cordless connection output end of the energy storage power supply 10 is externally arranged, so that when the charging apparatus 20 is supported by the energy storage power supply 10, two charging apparatuses 20 are both in circuit connection to the energy storage power supply 10.

More preferably, the charging apparatus 20 is in circuit connection after being locked by the energy storage power supply 10. When the charging apparatus 20 is powered by the energy storage power supply 10, the interfacing output of the charging apparatus 20 is stopped.

The charging apparatus 20 and the energy storage power supply 10 can respectively supply power to at least one electrical device 30. When the charging apparatus 20 is powered by the energy storage power supply 10, the charging apparatus 20 is electrically connected to the energy storage power supply 10, where the charging apparatus 20 stops outputting an electric current. Referring to Fig. 16A, further, the charging apparatus 20 includes at least one charging apparatus body 210, a charging apparatus input portion 220 and at least one charging apparatus output portion 230; the charging apparatus body 210 receives an electric current input by the charging apparatus input portion 220 and stores the electric current, and the charging apparatus output portion 230 is in circuit connection to the charging apparatus body 210 to output the electric current. Preferably, when the charging apparatus input portion 220 is in circuit connection to the energy storage power supply 10, the charging apparatus output portion 230 is controlled by the charging apparatus body 210 to stop outputting the electric current.

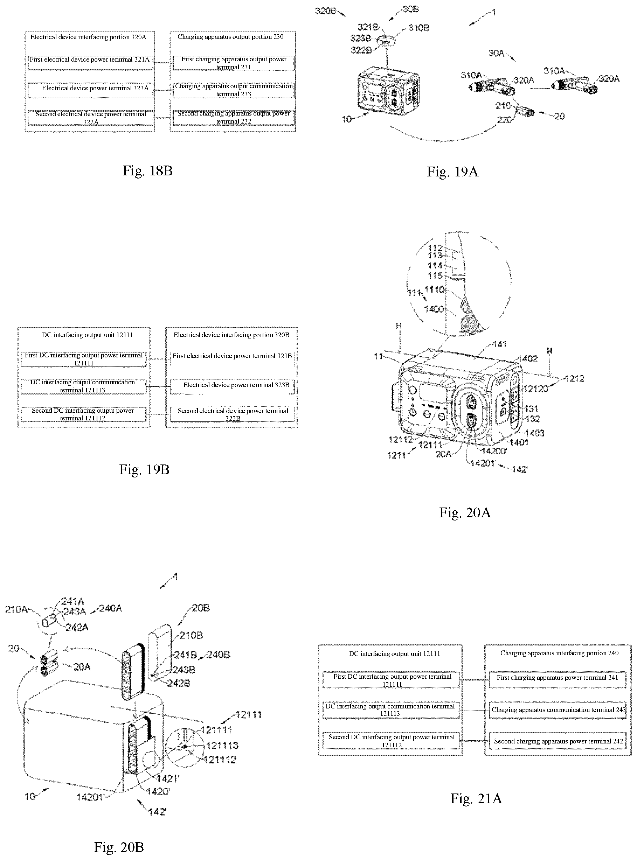

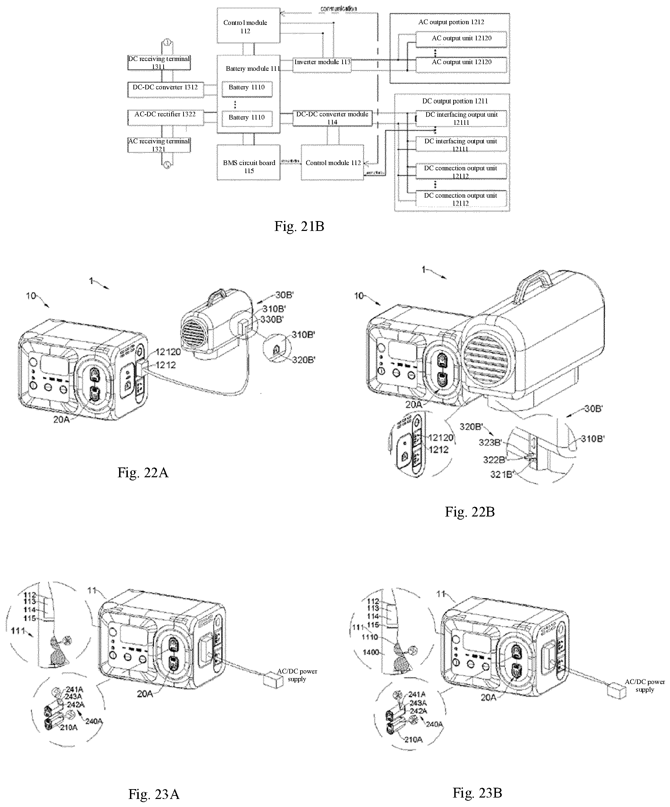

Referring to Fig. 16A and Fig. 16B in the accompanying drawings, combined with Fig. 21B, the energy storage power supply 10 includes a power supply body 11, an output portion 12 and a power receiving portion 13, where the output portion 12 and the power receiving portion 13 are in circuit connection to the power supply body 11 respectively.

The power receiving portion 13 is conductively connected to an AC/DC power supply, where the power supply body 11 is in circuit connection to the power receiving portion 13, where the power supply body 11 receives an electric current of the AC/DC power supply and stores electricity, the output portion 12 is in circuit connection to the power supply body 11, and the output portion 12 outputs AC/DC electric current. The electrical apparatus 30 can be in circuit connection to the output portion 12 of the energy storage power supply 10, so that the electrical device 30 is in circuit connection.

The power receiving portion 13 includes at least one DC-DC module 131 and at least one AC-DC module 132, the receiving terminal 131 is in circuit connection to the DC-DC module 131, and the receiving terminal 131 can be in circuit connection to a DC power supply. The AC-DC module 132 can be in circuit connection to an AC power supply.

The AC-DC module 132 includes at least one AC receiving terminal 1321 and at least one AC-DC rectifier 1322 for converting alternating current (AC) into direct current (DC); the AC receiving terminal 1321 can be in circuit connection to the AC power supply; the AC-DC rectifier 1322 is in circuit connection to the AC receiving terminal 1321, so that the AC-DC rectifier 1322 rectifies an external AC electric current into a DC electric current suitable for storage by the power supply body 11, so that the power supply body 11 stores electrical energy. Preferably, the AC receiving terminal 1321 is implemented as a groundable plug. The DC-DC module 131 includes at least one DC receiving terminal 1311 and at least one DC-DC converter 1312 that converts alternating current (DC) into direct current (DC). The DC receiving terminal 1311 is in circuit connection, and the DC receiving terminal 1311 can be in circuit connection to the DC power supply, so that the DC-DC converter 1312 rectifies an external DC electric current into a DC electric current suitable for storage by the power supply body 11, so that the power supply body 11 stores electrical energy. Preferably, the DC receiving terminal 1311 and the AC receiving terminal 1321 of the power receiving portion 13 are arranged co-planarly.

The DC receiving terminal 1311 is selected from at least one of a TYPE C interface, a solar charging interface, or the like, and the type of the DC receiving terminal 1311 is not limited by the present application. The power supply body 11 includes a battery module 111 and a control module 112, where the control module 112 can be in circuit connection to the battery module 111, the output portion 12 and the power receiving portion 13, respectively, so that the output portion 12 outputs the AC/DC electric current under the control of the control module 112. The control module 112 is in circuit connection to the AC-DC rectifier 1322 and the DC-DC converter 1312, respectively. The control module 112 controls the charging and discharging of the battery module 111.

The battery module 111 of the power supply body 11 further includes at least two batteries 1110, and the batteries 1110 store the DC electric current output by the power receiving portion. The battery module 111 includes at least two single batteries 1110, and the batteries 1110 store the DC electric current output by the power receiving portion.

The number of single batteries 1110 is not limited by the present application and can be designed according to specific needs. The number of batteries 1110 includes, but is not limited to, 2, 3, 4, 5, 6, 7, 8, 9, 10, 11, 12, 13, 14, 15, 16, 17, 18, 19, 20 or 21 and more.

The control module 112 includes at least one BMS circuit board 115. The BMS circuit board 115 is in circuit connection to the battery 1110. The BMS circuit board 115 is in circuit connection to the AC-DC rectifier 1322 and the DC-DC converter 1312, respectively. The BMS circuit board 115 is in circuit connection to the output portion 12.

The BMS circuit board 115 is connected to each single battery 1110 of the battery module 111 connected thereto, collects the voltage of each single battery 1110 and calculates the single voltage value of the battery module 111 based on the voltage of the single battery 1110, and determines whether there is a voltage imbalance fault of the single battery 1110 by comparing the voltage of the single battery 1110 with the single voltage value of the battery module 111.

The BMS circuit board 115 is connected to each single battery 1110 of the battery module 111 connected thereto, collects the voltage of each single battery 1110, and calculates the voltage of the battery module 111 based on the voltage of the single battery 1110. The BMS circuit board 115 compares the collected voltage of single battery 1110 with a voltage threshold of the single battery module 111, and monitors whether the single battery module 111 has a fault of low voltage or high voltage; the BMS circuit board 115 acting as the host summarizes the voltage of single battery 1110 of all battery modules 111 to obtain the voltage of the battery system, and the BMS circuit board 115 acting as the host compares the calculated voltage of the battery system with a voltage threshold of the battery system to detect and determine whether the battery system has a fault of low battery system voltage or high battery system voltage.

The power supply body 11 further includes at least one inverter and at least one DC-DC converter. The inverter and the DC-DC converter are in circuit connection to the BMS circuit board 115 respectively. The DC-DC converter is in circuit connection to the battery module 111, and the DC-DC converter outputs the direct electric current stored in the battery module 111 into a direct electric current suitable for the voltage and electric current of the electrical device 30/charging apparatus 20. The inverter is in circuit connection to the battery module 111.

The inverter outputs the direct electric current stored in the battery module 111 into an alternating electric current suitable for the voltage and electric current of the electrical device 30/charging apparatus 20.

When the control module 112 obtains an AC output trigger signal, under the control of the control module 112, the DC electric current stored in the battery 1110 is inverted into the AC electric current by the inverter, and the AC electric current is output from the output portion 12, so that the electrical device 30 can obtain the AC electric current output by the output portion 12.

When the control module 112 obtains a DC output trigger signal, under the control of the control module 112, the DC electric current stored in the battery 1110 is converted into the corresponding output electric current by the DC-DC converter, so that the electrical device 30/charging apparatus 20 being in circuit connection to the energy storage power supply 10 can obtain the DC electric current output by the output portion 12.

The power supply body 11 further includes at least one inverter module 113 and at least one DC-DC converter module 114. The inverter module 113 and the DC-DC converter module 114 are in circuit connection to the control module 112, respectively. The DC-DC converter is in circuit connection to the battery module 111, and the DC-DC converter module 114 outputs the direct electric current stored in the battery module 111 into a direct electric current suitable for the voltage and electric current of the electrical device 30/charging apparatus 20. The inverter module 113 is in circuit connection to the battery module 111, and the inverter module 113 outputs the direct electric current stored in the battery module 111 into an alternating electric current suitable for the voltage and electric current of the electrical device 30/charging apparatus 20. An AC output unit 12120 is in circuit connection to the inverter module 113 to output the AC electric current.

When the control module 112 obtains the AC output trigger signal, under the control of the control module 112, the DC electric current stored in the battery 1110 is inverted into the AC electric current by the inverter module 113, which is output from the output portion 12, so that the electrical device 30 can obtain the AC electric current output by the output portion 12.

When the control module 112 obtains the DC output trigger signal, under the control of the control module 112, the DC electric current stored in the battery 1110 is converted into the corresponding output electric current by the DC-DC converter module 114, so that the electrical device 30/charging apparatus 20 being in circuit connection to the energy storage power supply 10 can obtain the DC electric current output by the output portion 12.

Further, the power supply body 11 further includes at least one BMS management module, where the BMS management module is in circuit connection to the battery 1110.

In a variant of this preferred embodiment, the second electrical device 30B is in circuit connection to the energy storage power supply 10 in a cordless manner. The output portion 12 further includes at least one DC output portion 1211 and at least one AC output portion 1212, where the DC output portion 1211 and the AC output portion 1212 are in circuit connection to the power supply body 11, respectively, where the DC output portion 1211 can output the DC electric current, the AC output portion 1212 can output the AC electric current.

The AC output portion 1212 includes at least one AC output unit 12120, and the power supply body 11 is in circuit connection to the AC output unit 12120 to output the AC electric current.

Preferably, the DC output portion 1211 and the AC output unit 12120 are arranged on different planes. In this preferred embodiment, the AC output unit 12120, the DC receiving terminal 1311 and the AC receiving terminal 1321 are arranged co-planarly.

Referring to Fig. 16A and Fig. 16B in the accompanying drawings, in a preferred embodiment of the present application, the DC output portion 1211 supplies power to at least one plug-in connected charging apparatus 20 in a manner of being internally arranged in the energy storage power supply 10. The DC output portion 1211 includes at least one DC interfacing output unit 12111 and at least one DC connection output unit 12112, where the DC interfacing output unit 12111 is in cordless circuit connection to the second electrical device 30B or the charging apparatus 20 without any wires. The DC connection output unit 12112 is an electrical connector connected to the electrical device 30 with a wire.

Preferably, the DC interfacing output unit 12111 is in circuit connection to the DC-DC converter module 114 to output electric current of different magnitudes.

The number of DC interfacing output units 12111 is two or more. Further, the DC interfacing output unit 12111 further includes at least one first DC interfacing output power terminal 121111, at least one second DC interfacing output power terminal 121112, and at least one DC interfacing output communication terminal 121113. The charging apparatus 20 is in circuit connection to the first DC interfacing output power terminal 121111 and at least one second DC interfacing output power terminal 121112 to receive the DC electric current. The charging apparatus 20 is in circuit connection to the DC interfacing output communication terminal 121113 to receive communication information. The DC interfacing output unit 12111 can be directly interfaced with the electrical device 30 or the charging apparatus 20 to conduct a circuit without requiring other wires. The DC connection output unit 12112 is an electrical connector connected to the electrical device 30 or the charging apparatus 20 with a wire.

Further, the DC interfacing output communication terminal 121113 communicates at least one piece of power supply-related information to the electrical device and/or receives at least one piece of device-related information.

It is worth mentioning that the power supply-related information includes at least one of device identification information or power usage-related information. The device-related information may include rated power, rated voltage, rated current, electrical signals of device service conditions, electrical signals of user commands, information to be uploaded and the like of the electrical device 30 or the charging apparatus 20, and this utility model is not subject to any restriction in this regard.

It is worth mentioning that the DC interfacing output unit 12111 is connected to the electrical device 30 without a wire, which, from the spatial position, changes the electrical connection relationship between the energy storage power supply 10 and the electrical device 30, and it is only needed to interface the energy storage power supply 10 and the electrical device 30.

Preferably, the first DC interfacing output power terminal 121111, at least one second DC interfacing output power terminal 121112 and at least one DC interfacing output communication terminal 121113 of the energy storage power supply 10 are respectively implemented as pins, so that the energy storage power supply 10 can be in circuit connection to the charging apparatus 20 or the second electrical device 30B in an interfacing manner.

Preferably, with reference to Fig. 16B and Fig. 16C in the accompanying drawings, the charging apparatus 20 is connected to the energy storage power supply 10 in an interfacing manner, where the charging apparatus 20 and the energy storage power supply 10 communicate and are in circuit connection to each other in an interfacing manner.

The charging apparatus input portion 220 of the charging apparatus 20 includes at least one first charging apparatus input power terminal 221 and at least one second charging apparatus input power terminal 222 and at least one charging apparatus input communication terminal 223, where the first DC interfacing output power terminal 121111 of the energy storage power supply 10 is interfaced with the first charging apparatus input power terminal 221 of the charging apparatus 20, and the second DC interfacing output power terminal 121112 of the energy storage power supply 10 is interfaced with the corresponding second charging apparatus input power terminal 222 of the charging apparatus 20, so that the energy storage power supply 10 and the charging apparatus 20 are interfaced through the power terminals to form a circuit. In other words, the charging apparatus 20 can receive the electric current through the first charging apparatus input power terminal 221 and the second charging apparatus input power terminal 222. The charging apparatus input communication terminal 223 of the charging apparatus 20 is in circuit connection to the DC interfacing output communication terminal 121113 of the energy storage power supply 10 for interfaced communication.

Preferably, with reference to Fig. 17A and Fig. 17B in the accompanying drawings, the charging apparatus 20 is connected to the electrical device 30 in an interfacing manner, where the charging apparatus 20 and the electrical device 30 communicate and are in circuit connection to each other in an interfacing manner.

The electrical device 30 further includes at least one electrical device body 310 and at least one electrical device interfacing portion 320; the electrical device body 310 is in circuit connection to the electrical device interfacing portion 320, and the electrical device body 310 can convert electrical energy into other energy to do work. When the electrical device 30 is interfaced with the charging apparatus 20 and the charging apparatus 20 is connected to the electrical device 30 in an interfacing manner, the charging apparatus output portion 230 of the charging apparatus 20 is in circuit connection to the electrical device interfacing portion 320 of the electrical device 30 in an interfacing manner.

The electrical device interfacing portion 320 further includes at least one first electrical device power terminal 321, a second electrical device power terminal 322 and at least one electrical device communication terminal 323. Further, the charging apparatus output portion 230 of the charging apparatus 20 includes at least one first charging apparatus output power terminal 231, at least one second charging apparatus output power terminal 232, and at least one charging apparatus output communication power terminal 233. The first charging apparatus output power terminal 231 of the charging apparatus 20 is interfaced with the first electrical device power terminal 321 of the electrical device 30, and the first charging apparatus output power terminal 232 of the charging apparatus 20 is interfaced with the second electrical device power terminal 322 of the electrical device 30 to form a circuit. The charging apparatus output communication power terminal 233 of the charging apparatus 20 is interfaced with the electrical device communication terminal 323 of the electrical device 30 to communicate in an interfacing manner.

Preferably, the first charging apparatus output power terminal 231 and the second charging apparatus output power terminal 232 and the charging apparatus output communication terminal 233 of the charging apparatus 20 are respectively implemented as pins, so that the charging apparatus 20 is in circuit connection to the electrical device 30 in an interfacing manner.

It is worth mentioning that the number of terminals of the charging apparatus 20 can not only be implemented as three, but also can be implemented as two to form a loop, or can be implemented as more than four to be in circuit connection in a communicated manner.

In addition, the number of terminals of the charging apparatus 20 can not only be implemented as three, but also can be implemented as two to form a loop, or can be implemented as more than four to be in circuit connection in a communicated manner. The charging apparatus output communication terminal 233 of the charging apparatus 20 communicates at least one piece of power supply-related information to the electrical device 30 and/or receives at least one piece of device-related information.

It is worth mentioning that the power supply-related information includes at least one of device identification information or power usage-related information. The device-related information may include rated power, rated voltage, rated current, electrical signals of device service conditions, electrical signals of user commands, information to be uploaded and the like of the electrical device 30, and the present application is not subject to any restriction in this regard.

Preferably, referring to Fig. 18A and Fig. 18B, the electrical device 30 interfaced with the charging apparatus 20 is the first electrical device 30A, where the first electrical device 30A includes at least one electrical device body 310A and at least one electrical device interfacing portion 320A, the electrical device body 310 of the first electrical device 30A is in circuit connection to the electrical device interfacing portion 320A, and the electrical device body 310A can convert electrical energy into other energy to do work.

Further, the first electrical device 30A further includes at least one electrical device body 310A and at least one electrical device interfacing portion 320A; the electrical device body 310A is in circuit connection to the electrical device interfacing portion 320A, and the electrical device body 310A can convert electrical energy into other energy to do work. When the charging apparatus 20 is connected to the first electrical device 30A in an interfacing manner, the charging apparatus output portion 230 of the charging apparatus 20 is in circuit connection to the electrical device interfacing portion 320A of the first electrical device 30A in an interfacing manner.

Preferably, the electrical device body 310A has an electrical device interfacing cavity, so that the charging apparatus 20 supplies power to the first electrical device 30A in a manner of being placed into the electrical device interfacing cavity of the electrical device 30A. Further, the charging apparatus 20 can continuously supply power to the electrical device 30 in a manner of being replaced, so as to continuously supply power to the electrical device 30.

The electrical device interfacing portion 320A of the first electrical device 30A further includes a first electrical device power terminal 321A, a second electrical device power terminal 322A and at least one electrical device communication terminal 323A. The first charging apparatus output power terminal 231 of the charging apparatus 20 is interfaced with the first electrical device power terminal 321A of the first electrical device 30A, and the first charging apparatus output power terminal 232A of the charging apparatus 20 is interfaced with the second electrical device power terminal 322A of the first electrical device 30A to form a circuit. The charging apparatus output communication power terminal 233 of the charging apparatus 20 is interfaced with the electrical device communication terminal 323A of the first electrical device 30A to communicate in an interfacing manner.

Referring to Fig. 18A in the accompanying drawings, when the electrical device 30B is implemented as the second electrical device 30B, the second electrical device 30B can be in circuit connection to the energy storage power supply 10 in a corded manner. The second electrical device 30B further includes an electrical device body 310B and at least one electrical device connection portion 330B, where the electrical device connection portion 330B is in circuit connection to the energy storage power supply 10 in a corded manner. When the electrical device connection portion 330B is in circuit connection to the energy storage power supply 10 in a corded manner, the second electrical device 30B is kept within a certain range of the energy storage power supply 10 for use. Further, the second electrical device 30B can do work while being powered by the energy storage power supply 10.

More preferably, the second electrical device 30B and the energy storage power supply 10 can be in circuit connection to each other in a cordless manner.

Referring to Fig. 19A and Fig. 19B in the accompanying drawings, the second electrical device 30B further includes at least one electrical device body 310B and at least one electrical device interfacing portion 320B; the electrical device body 310B is in circuit connection to the electrical device interfacing portion 320B, and the electrical device body 310B can convert electrical energy into other energy to do work. When the second electrical device 30B is interfaced with the energy storage power supply 10, the DC interfacing output unit 12111 of the energy storage power supply 10 is in circuit connection to the electrical device interfacing portion 320B of the second electrical device 30B.

The electrical device interfacing portion 320B of the second electrical device 30B further includes at least one first electrical device power terminal 321B, a second electrical device power terminal 322B and at least one electrical device communication terminal 323B. The first DC interfacing output power terminal 121111 of the energy storage power supply 10 is interfaced with the first electrical device power terminal 321B of the second electrical device 30B, and the second DC interfacing output power terminal 121112 of the energy storage power supply 10 is interfaced with the second electrical device power terminal 322B of the second electrical device 30B to form a loop. The DC interfacing output communication terminal 121113 of the energy storage power supply 10 is interfaced with the electrical device communication terminal 323B of the second electrical device 30B to communicate in an interfacing manner.

Preferably, the power terminals and communication terminals are implemented as pins. The DC interfacing output communication terminal 1213 of the charging apparatus 20 communicates at least one piece of power supply-related information to the electrical device 30 and/or receives at least one piece of device-related information.

It is worth mentioning that the power supply-related information includes at least one of device identification information or power usage-related information. The device-related information may include rated power, rated voltage, rated current, electrical signals of device service conditions, electrical signals of user commands, information to be uploaded and the like of the electrical device 30, and the present application is not subject to any restriction in this regard.

The second electrical device 30B is powered by the energy storage power supply 10 in an interfacing manner, and the electric current output by the circuit of the second electrical device 30B and the energy storage power supply 10 can be a large electric current greater than 8 amps.

Furthermore, the second electrical device 30B and the first electrical device 30A are powered at the same time while being separated by a certain distance in space, so as to facilitate the user to use the second electrical device 30B and the first electrical device 30A at the same time. Optionally, the type and number of the first powered devices 30A are not limited by the present application. When the number of charging apparatuses 20 is more than one, a plurality of first electrical devices 30A can be powered by the charging apparatuses 20 respectively, and they are powered at the same time while being separated by a certain distance in space.

Furthermore, the first electrical device 30A can be powered without interruption by replacing the charging apparatus 20. That is to say, the charging apparatus 20 continuously supplies power to the first electrical device 30A in the manner of being replaced, so that the electrical device 32 is continuously supplied with power.

More preferably, the charging apparatus 20 supplies power to the first electrical device 30A in a manner of being inserted. When the power of the charging apparatus 20 is less than a threshold, the charging apparatus 20 is unlocked from the first electrical device 30A by pressing, sliding, etc., and then the charging apparatus 20 is charged by the energy storage power supply 10 in a manner of being inserted to the energy storage power supply 10 again, and other charging apparatuses 20 powered by the energy storage power supply 10 can be taken out to supply power to the first electrical device 30A. In other words, the charging apparatus 20 can be inserted and removed with one click, which makes it easier for the charging apparatus 20 to be in circuit connection to the energy storage power supply 10 and the first electrical device 30A respectively.

Referring to Fig. 20A to Fig. 21B in the accompanying drawings, the energy storage power supply 10 in the preferred embodiment shown in Fig. 16A in the accompanying drawings is preferably implemented as an integrated energy storage power supply. The power supply body 11, the output portion 12 and the power receiving portion 13 of the energy storage power supply 10 are assembled into one body.

The BMS circuit board 115 of the energy storage power supply 10 monitors the discharging voltage, electric current and temperature of the battery module 111. The BMS circuit board 115 is configured, when at least one of the temperature, electric current or voltage of the battery 1110 is monitored to deviate from the preset value, to control at least one DC interfacing output unit 12111 of the output module 22 to break the circuit. Further, the BMS circuit board 115 is configured, when it is monitored that the temperature is higher than a first preset protection temperature threshold, the voltage is higher than a first preset protection voltage threshold, and the instantaneous electric current is higher than a first preset protection electric current threshold, to control at least one DC interfacing output unit 12111 of the output module 22 to break the circuit or limit the magnitude of the output voltage and/or the output current.

In addition, when the BMS circuit board 115 is configured, when it is monitored that the electric current of the battery 1110 is lower than a second preset protection electric current value or the voltage is lower than a second preset protection voltage value, to control at least one DC interfacing output unit 12111 of the output module 22 to break the circuit. It is worth mentioning that the first preset protection voltage threshold is greater than the second preset protection voltage threshold.

The BMS circuit board 115 can monitor battery status information to disconnect the electrical path between the power supply and the electric motor or limit the output voltage and/or output current of the power supply, at least in the event of undervoltage and/or overtemperature. Preferably, at least one of the DC interfacing output units 12111 is disposed close to the top surface 1402 of the housing body 141. The number of DC interfacing output units 12111 is one or more.

At least one DC interfacing output unit 12111 is disposed close to the circumferential side surface 1401 of the housing body 141.

The number of DC interfacing output units 12111 is two or more, and each DC interfacing output unit 12111 is disposed at at least one interfacing portion 142. When the charging apparatus 20 is inserted into the interfacing portion 142, the number of electrically connected DC interfacing output units 12111 is one or more.

Further, an output end of the DC interfacing output unit 12111 includes at least one of a USB interface, a TYPE C interface, a Lightning interface, or a cigarette lighter interface, which can be designed according to specific situations. The type of the DC interfacing output unit 12111 is not limited by the features and scope of the present application.

Referring to Fig. 20A and Fig. 20B in the accompanying drawings, at least one of the DC connection output unit 12112 or the DC interfacing output unit 12111 of the energy storage power supply 10 is disposed co-planarly. The DC interfacing output unit 12111 can be directly interfaced with the charging apparatus 20 to conduct a circuit without requiring other wires. The DC connection output unit 12112 is an electrical connector connected to the charging apparatus 20 with a wire.

In the first preferred embodiment of the present application, the DC output portion 1211 of the output portion 12 is provided with a plurality of interfaces, where the DC output portion 1211 can be adapted to a plurality of electrical devices 30/charging apparatuses 20 which are respectively connected to adapted ports to be charged by the energy storage power supply 10.

Preferably, the energy storage power supply 10 further includes a housing 14. The housing 14 has a circumferential side surface 1401 and a top surface 1402 and a bottom surface 1403 circumferentially connected by the circumferential side surface 1401, and the housing 14 has a containing cavity 1400, where the top surface 1402 and the bottom surface 1403 are kept opposite to each other. The power supply body 11, the output portion 12 and the power receiving portion 13 are arranged in the containing cavity 1400 of the housing 14.

It is worth mentioning that the circumferential side surface 1401 is composed of four surfaces connected one after another and ending with each other, and define the open space on both sides.

Preferably, at least one of the DC interfacing output units 12111 is disposed close to the circumferential side surface 1401 and/or the top surface 1402, so that the charging apparatus 20 kept close to the circumferential side surface 1401 and/or the top surface 1402 is in circuit connection to at least one of the DC interfacing output units 12111. It is worth mentioning that the type of at least one of the DC interfacing output units 12111 is not subject to any restriction, and at least one of the DC interfacing output units 12111 can be implemented as a contact circuit connection.

Further, the housing 14 further includes at least one housing body 141 and at least one interfacing portion 142', and the interfacing portion 142' is disposed in the housing body 141. The interfacing portion 142' has at least one interfacing cavity 14200' and at least one interfacing opening 14201' that connects the interfacing cavity 14200' and the external space, where the interfacing cavity 14200' of the interfacing portion 142' and the containing cavity 1400 defined by the housing body 141 are kept apart. The interfacing opening 14201' of the interfacing portion 142' is formed on the circumferential sidewall 1401 defined by the housing body 141. Further, the interfacing portion 142' and the DC connection output unit 12112 are arranged co-planarly, where the interfacing opening 14201' of the interfacing portion 142' faces the circumferential side surface 1401.

The number of DC interfacing output units 12111 is two or more, and at least one of the DC interfacing output units 12111 is disposed in the interfacing cavity 14200 of the interfacing portion 142.

In the present application, at least one of the DC interfacing output units 12111 being close to the circumferential side surface 1401 refers to being arranged on the circumferential side surface 1401 of the housing 14 and/or being exposed to the external space from the circumferential side surface 1401 of the housing 14. At least one of the DC interfacing output units 12111 being kept close to the charging apparatus 20 on the circumferential side surface 1401 refers to being exposed to the external space from the top surface 1402 of the housing 14 or being arranged on the circumferential side surface 1401.

Preferably, the DC interfacing output unit 12111 is implemented as a pin connector, the DC interfacing output unit 12111 kept on the circumferential side surface 1401 of the energy storage power supply 10 is a male electrical connector, and the device interfacing portion 220 of the charging apparatus 20 is a female electrical connector corresponding to the DC interfacing output unit 12111, so that the charging apparatus 20 is in circuit connection to the DC interfacing output unit 12111 of the energy storage power supply 10 in an interfacing manner.

The DC interfacing output unit 12111 can also be implemented as a DC electrical connector, which may be implemented as a USB connector, a TYPE C interface, a Lightning interface, a pin interface, or an Anderson interface, where the present application is not subject to any restriction. Further, the number of interfacing portions 142' is two, and the two interfacing portions 142' are arranged along the height extension direction of the housing body 141. In other words, the number of charging apparatuses 20 accommodated in the interfacing portions 142' is two or more. The arrangement direction of the two charging apparatuses 20 extends along the height extension direction of the housing body 141, and the charging apparatuses 20 are kept on the same side of the DC interfacing output unit 12111 of the DC output portion 1211.

More preferably, the battery pack 20A is inserted into the interfacing portion 142' in a manner of being directly pushed without requiring a second action.

The interfacing portion 142' includes an interfacing body and a limiting mechanism. The limiting mechanism is preset on the interfacing body, and when the limiting mechanism is triggered, the limiting mechanism blocks or ejects the charging apparatus 20. In other words, the charging apparatus 20 is in circuit connection to the energy storage power supply 10 in a manner of being limited by the limiting mechanism in the interfacing portion 142'.

Further, the limiting mechanism is switched between a limit position and a release position. When the limiting mechanism is in the release position, the limiting mechanism does not protrude from the sidewall of the interfacing body to an interfacing cavity 14200' in a manner of being squeezed by the power supply device 210; when the limiting mechanism is in the limit position, the limiting mechanism protrudes from the sidewall of the interfacing body to the interfacing cavity 14200' to keep the charging apparatus 20 in a limited position.

One of the DC connection output units 12112 is disposed at the interfacing portion 142'. When the charging apparatus 20A is inserted in the interfacing portion 142', the charging apparatus 20 is in circuit connection to the DC connection output unit 12112.

The DC interfacing output unit 12111 further includes at least one first DC interfacing output power terminal 121111, at least one second DC interfacing output power terminal 121112, and at least one DC interfacing output communication terminal 121113, where the DC interfacing output communication terminal 121113 is formed between the first DC interfacing output power terminal 121111 and the second DC interfacing output power terminal 121112.

Preferably, the DC interfacing output unit 12111 is disposed on the circumferential side surface 1401 of the energy storage power supply 10, and the charging apparatus 20 is implemented as the integrated package 20B that accommodates at least two battery packs 20A, where the integrated package 20B that accommodates at least two battery packs 20A is powered in a manner of being supported by the energy storage power supply 10.

Referring to Fig. 20B in the accompanying drawings, the charging apparatus 20 includes at least one charging apparatus body 210 and at least one charging apparatus interfacing portion 240 being in circuit connection to the charging apparatus body 210, where the charging apparatus interfacing portion 240 integrates the charging apparatus input portion 220 and the charging apparatus output portion 230 of the charging apparatus 20.

The charging apparatus body 210 can identify whether the device being in circuit connection to its charging apparatus interfacing portion 240 is the energy storage power supply 10 or the electrical device 30, where the charging apparatus body 210 determines whether to charge or discharge, so as to charge and discharge through the charging interfacing portion 240. For example, when the charging apparatus 20 is plugged into a corresponding external device, the charging apparatus 20 sends an identity information identification code to the corresponding external device through the charging apparatus communication terminal 243 and the communication terminal of the external device connected thereto (the DC interfacing output communication terminal 121113 of the energy storage power supply 10 or the electrical device communication terminal 323 of the electrical device 30), and the communication terminal of the external device receives the identity information identification code sent by the charging apparatus communication terminal 243 of the charging apparatus 20.

The external device determines whether the identity information identification code of the charging apparatus 20 is true or false. When the external device determines that the identity information identification code is false, the processing ends; when the external device determines that the identity information identification code is true, the communication terminal of the external device replies "model code" to the charging apparatus 20, and the charging apparatus 20 receives the "model code" and uses it to determine whether the external device is a discharge device (such as the energy storage power supply 10) or the electrical device 30.

Further, when the charging apparatus 20 identifies that the external device is the discharge device (preferably, the discharge device the an energy storage power supply 10), the energy storage power supply 10 is, through the DC interfacing output unit 12111, in circuit connection to the charging apparatus interfacing portion 240 of the charging apparatus 20 interfaced therewith, and the charging apparatus 20 is charged by the energy storage power supply 10 through the charging apparatus interfacing portion 240. In other words, the charging apparatus interfacing portion 240 is equivalent to the charging apparatus input portion 220. When the charging apparatus 20 identifies that the external device is the electrical device 30, the electrical device 30 is, through the electrical device interfacing portion 320, in circuit connection to the charging apparatus interfacing portion 240 of the charging apparatus 20 interfaced therewith, and the charging apparatus 20 charges the electrical device 30 through the charging apparatus interfacing portion 240.

The device-related information includes but is not limited to device status, device cell temperature, user instructions and other communication-related information; that is, the communication-related information of the power supply system or other systems can be communicated through direct connection of terminals.

Another object of the present application is to provide an energy storage device and an energy storage power supply thereof, where the device-related information includes but is not limited to device status, device cell temperature, user instructions and other communication-related information; that is, the communication-related information of the power supply system or other systems can be communicated through direct connection of terminals.

The charging apparatus interfacing portion 240 further includes at least one first charging apparatus power terminal 241, at least one second charging apparatus power terminal 242 and at least one charging apparatus communication terminal 243, so that the charging apparatus 20 is in circuit connection to the energy storage power supply 10 or the electrical device 30 through the first charging apparatus power terminal 241 and the second charging apparatus power terminal 242 to form a loop. The charging apparatus communication terminal 243 can communicates at least one piece of power supply-related information or at least one piece of device-related information.

When the charging apparatus 20 is interfaced with the energy storage power supply 10, the first charging apparatus power terminal 241 can be in circuit connection to the first DC interfacing output power terminal 121111 of the energy storage power supply 10, the second charging apparatus power terminal 242 can be in circuit connection to the second DC interfacing output power terminal 121112 of the energy storage power supply 10, and the charging apparatus communication terminal 243 can be in circuit connection to the DC interfacing output communication terminal 121113 of the energy storage power supply 10.

When the charging apparatus 20 is interfaced with the electrical device 30, the first charging apparatus power terminal 241 can be in circuit connection to the first electrical device power terminal 321 of the electrical device 30, the second charging apparatus power terminal 242 can be in circuit connection to the second electrical device power terminal 322 of the electrical device 30, and the charging apparatus communication terminal 243 can be in circuit connection to the electrical device communication terminal 323 of the electrical device 30. The integrated package 20B is interfaced with the DC interfacing output unit 12111 of the energy storage power supply 10, and the integrated package 20B is charged by the DC interfacing output unit 12111.

Further, the integrated package 20B is cordlessly connected to the energy storage power supply 10 in a manner of being supported by the energy storage power supply 10, and the battery pack 20A is cordlessly connected to the energy storage power supply 10 in a manner of being placed in the energy storage power supply 10. The battery pack 20A is accommodated in the integrated package 20B in a pluggable manner, and the integrated package 20B can be in circuit connection to the battery pack 20A accommodated therein.

The integrated package 20B can store electrical energy to supply power to other electrical devices 30, where the integrated package 20B can accommodate other battery packs 20A, so that a multi-pack battery body 210B is in circuit connection to the accommodated battery packs 20A. The integrated package 20B can be directly interfaced to the electrical device 30 to supply power to the electrical device 30, and the battery packs 20A therein can be interfaced with and supply power to the electrical device 30 in a manner of being taken out from the integrated package 20B.

When a battery pack interfacing portion 240B is placed in the interfacing portion 142 of the energy storage power supply 10 and the battery pack interfacing portion 240B of the integrated package 20B is interfaced with the DC interfacing output unit 12111, the battery pack interfacing portion 240B can be powered cordlessly by the DC interfacing output unit 12111.

Preferably, the battery pack interfacing portion 240B is disposed on a bottom surface of the multi-pack battery body 210B, and the battery pack 20A placed in the multi-pack battery body 210B is kept toward the opening, and after the integrated package 20B is placed in the interfacing portion 142 of the energy storage power supply 10, the battery pack 20A placed in the integrated package 20B can also be inserted and removed.

Referring to Fig. 20B in the accompanying drawings, the battery pack interfacing portion 240B of the integrated package 20B in this preferred embodiment is the charging apparatus input portion 220 and the charging apparatus output portion 230 of the charging apparatus 20. In other words, the battery pack interfacing portion 240B of the integrated package 20B is chargeable and dischargeable, and the battery pack interfacing portion 240B of the integrated package 20B can charge and discharge in an interfacing manner.

Optionally, the battery pack interfacing portion 240B is disposed on a side and/or bottom surface of the multi-pack battery body 210B.

Preferably, the battery pack interfacing portion 240B can be interfaced with the DC interfacing output unit 12111 of the energy storage power supply 10, and the battery pack interfacing portion 240B can also be interfaced with the electrical device interfacing portion 320B of the first electrical device 30B of the electrical device 30.

The battery pack interfacing portion 240B further includes at least one first battery pack power terminal 241B, at least one second battery pack power terminal 242B and at least one battery pack communication terminal 243B, so that the integrated package 20B can be in circuit connection to the energy storage power supply 10 or the electrical device 30 through the first battery pack power terminal 241B and the second battery pack power terminal 242B to form a loop. The battery pack communication terminal 243B can communicates at least one piece of power supply-related information or at least one piece of device-related information.

When the integrated package 20B is interfaced with the energy storage power supply 10, the first battery pack power terminal 241B can be in circuit connection to the first DC interfacing output power terminal 121111 of the energy storage power supply 10, the second battery pack power terminal 242B can be in circuit connection to the second DC interfacing output power terminal 121112 of the energy storage power supply 10, and the battery pack communication terminal 243B can be in circuit connection to the DC interfacing output communication terminal 121113 of the energy storage power supply 10.

When the integrated package 20B is interfaced with the electrical device 30, the first battery pack power terminal 241B can be in circuit connection to the first electrical device power terminal 321 of the electrical device 30, the second battery pack power terminal 242B can be in circuit connection to the second electrical device power terminal 322 of the electrical device 30, and the battery pack communication terminal 243B can be in circuit connection to the electrical device communication terminal 323 of the electrical device 30.

Preferably, the battery pack interfacing portion 240B further includes at least one battery pack connection input portion and at least one battery pack connection output portion, where the battery pack connection input portion of the battery pack interfacing portion 240B can be cordlessly electrically connected to the energy storage power supply 10, and the battery pack output portion of the battery pack interfacing portion 240B can be cordlessly connected to the electrical device 30. The number of battery pack connection input portions and battery pack connection output portions is not limited by the present application, which those skilled in the art should be able to understand and know.

In another variant embodiment, the interfacing portion 142' is disposed on the circumferential side surface 1401 of the housing body 141, and the interfacing portion 142' is disposed in a manner of protruding from the top surface 1402 of the housing body 141. An interfacing opening 14201' is disposed in a manner of being kept outside the housing body 141, so that the interfacing cavity 14200' can be directly connected to the external space, and the charging apparatus 20 can be directly inserted into the interfacing cavity 14200'.

It is worth mentioning that the containing cavity 1400 defined by the housing body 141 and the interfacing cavity 14200' defined by the interfacing portion 142' are kept apart, and the DC output portion 1211 arranged in the interfacing cavity 14200' is in circuit connection to the control module 112.

Referring to Fig. 20A in the accompanying drawings, the charging apparatus 20 placed inside the energy storage power supply 10 is the battery pack 20A, so that the battery pack 20A is in cordless circuit connection to the energy storage power supply 10 in a manner of being placed in the energy storage power supply 10 in a limited position.

The battery pack 20A includes at least one battery body 210A and at least one battery pack interfacing portion 240A, where the battery pack interfacing portion 240A can be in circuit connection to the battery body 210A, and the battery body 210A can store electrical energy to power other electrical devices 30.

Referring to Fig. 20A and Fig. 20B in the accompanying drawings, the battery pack interfacing portion 240A of the battery pack 20A in this preferred embodiment is the charging apparatus input portion 220 and the charging apparatus output portion 230 of the charging apparatus 20. In other words, the battery pack interfacing portion 240A of the battery pack 20A is chargeable and dischargeable, and the battery pack interfacing portion 240B of the integrated package 20B can charge and discharge in an interfacing manner.

When the battery pack interfacing portion 240A is interfaced with the DC interfacing output unit 12111 of the energy storage power supply 10, the battery pack interfacing portion 240A can be powered cordlessly by the DC interfacing output unit 12111.

Preferably, the battery pack interfacing portion 240A can be interfaced with the DC interfacing output unit 12111 of the energy storage power supply 10, and the battery pack interfacing portion 240A can also be interfaced with the electrical device interfacing portion 320A of the first electrical device 30A of the electrical device 30.

The battery pack interfacing portion 240A further includes at least one first battery pack power terminal 241A, at least one second battery pack power terminal 242A and at least one battery pack communication terminal 243A, so that the battery pack 20A can be in circuit connection to the energy storage power supply 10 or the electrical device 30 through the first battery pack power terminal 241A and the second battery pack power terminal 242A to form a loop. The battery pack communication terminal 243 can communicates at least one piece of power supply-related information or at least one piece of device-related information.

When the battery pack 20A is interfaced with the energy storage power supply 10, the first battery pack power terminal 241A can be in circuit connection to the first DC interfacing output power terminal 121111 of the energy storage power supply 10, the second battery pack power terminal 242A can be in circuit connection to the second DC interfacing output power terminal 121112 of the energy storage power supply 10, and the battery pack communication terminal 243A can be in circuit connection to the DC interfacing output communication terminal 121113 of the energy storage power supply 10.

When the battery pack 20A is interfaced with the electrical device 30, the first battery pack power terminal 241A can be in circuit connection to the first electrical device power terminal 321 of the electrical device 30, the second battery pack power terminal 242A can be in circuit connection to the second electrical device power terminal 322 of the electrical device 30, and the battery pack communication terminal 243A can be in circuit connection to the electrical device communication terminal 323 of the electrical device 30. Optionally, the battery pack 20A is plugged into and unplugged from the interfacing portion 142' of the energy storage power supply 10 in a pressed manner.

Preferably, the battery pack 20A further includes at least one battery pack connection input portion and at least one battery pack connection output portion, where the battery pack connection input portion of the battery pack 20A can be connected to a power supply end in a corded manner, e.g., the energy storage power supply 10, and the battery pack output portion of the battery pack 20A can be connected to the electrical device 30 in a corded manner. The number of battery pack connection input portions and battery pack connection output portions is not limited by the present application, which those skilled in the art should be able to understand and know. Referring to Fig. 22A and Fig. 22B in the accompanying drawings, the difference from the preferred embodiment shown in Fig. 17A to Fig. 19B in the accompanying drawings is that the second electrical device 30B of the electrical device 30 is implemented as an AC device and different from the second electrical device 30B, the AC output unit 12120 of the energy storage power supply 10 is in circuit connection to the second electrical device 30B, and the energy storage power supply 10 outputs the AC electric current.

The second electrical device 30B can be connected to the AC output unit 12120 of the energy storage power supply 10 by wires, or can be implemented as the first electrical device 30A being in cordless circuit connection to the AC output unit 12120 of the energy storage power supply 10, where the present application is not subject to any restriction. Further, the second electrical device 30B includes an electrical device body 310B and at least one electrical device interfacing portion 320B that is in circuit connection to the electrical device body 310B, where the electrical device interfacing portion 320B is implemented as a three-blade groundable connector.

Referring to Fig. 22B in the accompanying drawings, when the electrical device interfacing portion 320B of the second electrical device 30B is interfaced with the AC output unit 12120 of the energy storage power supply 10, and the second electrical device 30B is in circuit connection to the energy storage power supply 10 in a manner of its electrical device interfacing portion 320B being interfaced with the AC output unit 12120 of the energy storage power supply 10.

Further, the second electrical device 30B includes an electrical device body 310B and at least one electrical device connection portion 330B that is in circuit connection to the electrical device body 310B, where the electrical device connection portion 330B is implemented as a three-blade groundable connector.

Referring to Fig. 23A in the accompanying drawings, the charging priority of a charging system of at least one preferred embodiment shown in Fig. 16A to Fig. 21B in the accompanying drawings of the present application is disclosed and illustrated in detail, where the energy storage power supply 10 supplies power to the charging apparatus 20 in an accommodated manner, where the charging apparatus 20 is preferably charged relative to the battery module 111 inside the energy storage power supply 10.

When the charging apparatus 20 is in circuit connection to the energy storage power supply 10, and the BMS circuit board 115 monitors that the voltage of the charging apparatus 20 is not higher than a first preset charging apparatus voltage threshold, under the monitoring of the BMS circuit board 115, the battery module 111 inside the energy storage power supply 10 outputs the electric current to at least one externally connected charging apparatus 20 after receiving the DC electric current delivered by the power receiving portion 13.

When the BMS circuit board 115 of the energy storage power supply 10 monitors that the voltage of the charging apparatus 20 is not lower than the first preset charging apparatus voltage threshold, the energy storage power supply 10 stops supplying power to the corresponding charging apparatus 20. After the battery module 111 inside the energy storage power supply 10 receives an electric current that is greater than the electric current output to the charging apparatus 20, the battery module 111 stores electricity after receiving the DC electric current delivered by the power receiving portion 13.

It is worth mentioning that the first preset charging apparatus voltage threshold of the charging apparatus 20 is 100% of the rated voltage of the charging apparatus. In addition, the first preset charging apparatus voltage threshold of the charging apparatus 20 is a percentage of the rated voltage of the charging apparatus, which can also be implemented as 85%, 90%, or 95%. The battery module 111 inside the energy storage power supply 10 is charged and discharged at the same time, and the battery module 111 can be charged and discharged at the same time.

Further, after the battery module 111 inside the energy storage power supply 10 receives the electric current that is greater than the electric current output to the battery module 111, the internal battery module 111 stores electricity.

It is worth mentioning that when the number of charging apparatuses 20 is at least two, the battery module 111 inside the energy storage power supply 10 outputs the electric current to each externally connected charging apparatus 20 respectively after receiving the DC electric current delivered by the power receiving portion 13, and the charging apparatuses 12 are charged respectively without being affected by each other.

Further, when the number of charging apparatuses 20 is at least two, and when at least one of the charging apparatuses 20 is fully charged, the battery module 111 inside the energy storage power supply 10 outputs the electric current to the externally connected charging apparatus 20 with the lowest voltage after receiving the DC electric current delivered by the power receiving portion 13.

Preferably, after the charging apparatus body 210 of the charging apparatus 20 collects the input electric current from the charging apparatus interfacing portion 240, the charging apparatus body 210 controls the charging apparatus connection output portion to stop outputting the electric current.

Referring to Fig. 23B in the accompanying drawings, the charging priority of a charging system of the preferred embodiments shown in Fig. 16 to Fig. 21B in the accompanying drawings of the present application is disclosed and illustrated in detail, where the energy storage power supply 10 supplies power to the charging apparatus 20 in an accommodated manner, and when the energy storage power supply 10 is connected to the mains supply or an external power supply, the battery module 111 inside the energy storage power supply 10 is preferably charged relative to the charging apparatus 20.

The charging apparatus 20 externally connected to the energy storage power supply 10 is powered with priority over the internal battery module 111 of the energy storage power supply 10.

Preferably, after receiving the AC electric current, the power receiving portion 13 of the energy storage power supply rectifies the AC electric current into the DC electric current, the power receiving portion 13 delivers the DC electric current to the battery module 111, and the power receiving portion 13 of the energy storage power supply 10 receives the DC electric current.

When the BMS circuit board 115 of the energy storage power supply 10 monitors that the voltage of the internal battery module 111 is not higher than a first preset energy storage voltage threshold, the battery module 111 inside the energy storage power supply 10 stores electricity after receiving the DC electric current delivered by the power receiving portion 13.

When the BMS circuit board 115 of the energy storage power supply 10 monitors that the voltage of the internal battery module 111 is not lower than the first preset energy storage voltage threshold, the battery module 111 inside the energy storage power supply 10 outputs the electric current to at least one externally connected charging apparatus 20.

It is worth mentioning that the first preset energy storage voltage threshold of the battery module 111 is 40% of the rated voltage of the battery module 111. Preferably, the first preset energy storage voltage threshold of the battery module 111 is 45% of the rated voltage of the charging apparatus. More preferably, the first preset energy storage voltage threshold of the battery module 111 is 50% of the rated voltage of the charging apparatus. In addition, the first preset energy storage voltage threshold of the battery module 111 is a percentage of the rated voltage of the charging apparatus and can also be implemented as 55%, 60%, 65%, 70%, 75%, 80%, 85%, 90%, 95%, or 100%. The value of the first preset energy storage voltage threshold of the battery module 111 can be selected according to the specific product design, and the present application is not subject to any restriction in this regard.

When the number of charging apparatuses 20 is at least two, where the charging apparatuses 20 respectively receive the electric current output by the battery module 111 inside the energy storage power supply 10, and the charging apparatuses 20 are not affected by each other.

The magnitude of the electric current at which the charging apparatus 20 is charged by the energy storage power supply 10 can be controlled by the control module 112 of the energy storage power supply 10. When the voltage of the charging apparatus 20 is not higher than a second preset charging apparatus voltage threshold, the energy storage power supply 10 outputs the electric current to the charging apparatus 20 at a first charging current. When the voltage of the charging apparatus 20 is not lower than the second preset charging apparatus voltage threshold, the energy storage power supply 10 outputs the electric current to the charging apparatus 20 at a second charging current.

It is worth mentioning that the second preset charging apparatus voltage threshold of the charging apparatus 20 is 70% of the rated voltage of the charging apparatus. Preferably, the second preset charging apparatus voltage threshold of the charging apparatus 20 is 75% of the rated voltage of the charging apparatus. More preferably, the second preset charging apparatus voltage threshold of the charging apparatus 20 is 80% of the rated voltage of the charging apparatus. In addition, the second preset charging apparatus voltage threshold of the charging apparatus 20 is a percentage of the rated voltage of the charging apparatus, which can also be implemented as 85%, 90%, 95% or 100%.

A power supply method of the energy storage device according to the above preferred embodiments of the present application is disclosed and illustrated in detail, where the power supply method of the energy storage device further includes the following steps:
using the energy storage power supply 10 to be electrically connected to the mains supply or an external power supply; and
using the energy storage power supply 10 to preferably supply power to the charging apparatus 20 externally connected to the energy storage power supply 10 relative to the internal battery module 111 of the energy storage power supply 10.

Further, the preference in step (b) refers to that when the charging apparatus 20 requires power, the internal battery module 111 charges the charging apparatus 20, and when the electric current required by the charging apparatus 20 is less than electric current input by the battery module 111 inside the energy storage power supply 10, the battery module 111 inside the energy storage power supply 10 stores the remaining electricity.

Further, the power supply method of the energy storage device further includes the following steps:
using the charging apparatus body 210 of the charging apparatus 20 to control the charging apparatus connection output portion to stop outputting the electric current after collecting the electric current input by the interfacing portion 220 of the charging apparatus 20.

Preferably, step (a) of the power supply method in this preferred embodiment further includes the following steps:
(a.1) using the power receiving portion 13 of the energy storage power supply 10 to rectify the AC electric current into the DC electric current.

Further, step (a) of the power supply method in this preferred embodiment further includes the following steps:
(a.2) the power receiving portion 13 of the energy storage power supply 10 receives the DC electric current.

Preferably, step (b) of the power supply method in this preferred embodiment further includes the following steps:
(b.1) using the battery module 111 inside the energy storage power supply 10 to output the electric current to at least one externally connected charging apparatus 20 after receiving the DC electric current delivered by the power receiving portion 13.

Preferably, step (b) of the power supply method in this preferred embodiment further includes the following steps:
(b.1) when the voltage of the charging apparatus 20 is not higher than the first preset charging apparatus voltage threshold, using the battery module 111 inside the energy storage power supply 10 to output the electric current to at least one externally connected charging apparatus 20 after receiving the DC electric current delivered by the power receiving portion 13.

Preferably, step (b.1) of the power supply method in this preferred embodiment further includes the following steps:
(b.1.1) using the BMS circuit board 115 of the energy storage power supply 10 to monitor that the voltage of the charging apparatus 20 is not higher than the first preset charging apparatus voltage threshold; and
(b. 1.2) using the battery module 111 inside the energy storage power supply 10 to output the electric current to at least one externally connected charging apparatus 20 after receiving the DC electric current delivered by the power receiving portion 13.

It is worth mentioning that the first preset charging apparatus voltage threshold of the charging apparatus 20 is 100% of the rated voltage of the charging apparatus. In addition, the first preset charging apparatus voltage threshold of the charging apparatus 20 is a percentage of the rated voltage of the charging apparatus, which can also be implemented as 85%, 90%, or 95%.

Further, in step (b. 1.2), the battery module 111 inside the energy storage power supply 10 is charged and discharged at the same time, and the battery module 111 can be charged and discharged at the same time.

Further, in step (b. 1.2), when the number of charging apparatuses 20 is at least two, the battery module 111 inside the energy storage power supply 10 outputs the electric current to at least one externally connected charging apparatus 20 respectively after receiving the DC electric current delivered by the power receiving portion 13, and the charging apparatuses 12 are charged respectively without being affected by each other.

Further, in step (b. 1.2), when the number of charging apparatuses 20 is at least two, and when at least one of the charging apparatuses 20 is fully charged, the battery module 111 inside the energy storage power supply 10 outputs the electric current to the externally connected charging apparatus 20 with the lowest voltage after receiving the DC electric current delivered by the power receiving portion 13.

Preferably, step (b) of the power supply method in this preferred embodiment further includes the following steps:
(b.2) when it is monitored that the voltage of the charging apparatus 20 is not lower than the first preset charging apparatus voltage threshold, using the battery module 111 inside the energy storage power supply 10 to stop outputting the electric current to the charging apparatus 20.

Preferably, step (b.2) of the power supply method in this preferred embodiment further includes the following steps:
(b.2.1) using the BMS circuit board 115 of the energy storage power supply 10 to monitor that the voltage of the charging apparatus 20 is not lower than the first preset charging apparatus voltage threshold; and
(b.2.2) using the battery module 111 inside the energy storage power supply 10 to stop outputting the electric current to the charging apparatus 20.

A power supply method of another energy storage device according to the above preferred embodiments of the present application is disclosed and illustrated in detail, where the power supply method of the energy storage device further includes the following steps:
preferably, the power supply method in this preferred embodiment further includes the following steps after step (b.2):
(b.3) using the battery module 111 inside the energy storage power supply 10 to store electricity after receiving the electric current that is greater than the electric current output to the charging apparatus 20, and stores electricity after being charged to the first preset charging apparatus voltage threshold.
(a) using the energy storage power supply 10 to be electrically connected to the mains supply or an external power supply; and
(b) using the internal battery module 111 externally connected to the energy storage power supply 10 to preferably store electricity, and output the electric current to at least one externally connected charging apparatus when the power of the battery module inside the energy storage power supply is not lower than the first preset energy storage voltage threshold.

Preferably, step (a) of the power supply method in this preferred embodiment further includes the following steps:
(a.1) using the power receiving portion 13 of the energy storage power supply 10 to rectify the AC electric current into the DC electric current.

Further, step (a) of the power supply method in this preferred embodiment further includes the following steps:
(a.2) the power receiving portion 13 of the energy storage power supply 10 receives the DC electric current.

Further, step (b) of the power supply method in this preferred embodiment further includes the following steps:
(b.1) when the power of the battery module 111 inside the energy storage power supply 10 is not higher than the first preset energy storage voltage threshold, using the battery module 111 inside the energy storage power supply 10 to store electricity after receiving the DC electric current delivered by the power receiving portion 13.
(b.2) when the power of the battery module 111 inside the energy storage power supply 10 is not lower than the first preset energy storage voltage threshold, using the battery module 111 inside the energy storage power supply 10 to output the electric current to at least one externally connected charging apparatus 20.

Preferably, step (b.1) of the power supply method in this preferred embodiment further includes the following steps:
(b.1.1) using the BMS circuit board 115 of the energy storage power supply 10 to monitor that the voltage of the internal battery module 111 is not higher than the first preset energy storage voltage threshold; and
(b. 1.2) using the battery module 111 inside the energy storage power supply 10 to store electricity after receiving the DC electric current delivered by the power receiving portion 13.
using the battery module 111 inside the energy storage power supply 10 to store electricity after receiving the DC electric current delivered by the power receiving portion 13.

Preferably, step (b.2) of the power supply method in this preferred embodiment further includes the following steps:
(b.2.1) using the BMS circuit board 115 of the energy storage power supply 10 to monitor that the voltage of the internal battery module 111 is not lower than the first preset energy storage voltage threshold; and
(b.2.2) using the battery module 111 inside the energy storage power supply 10 to output the electric current to the external charging apparatus 20 after receiving the DC electric current delivered by the power receiving portion 13.

It is worth mentioning that the first preset energy storage voltage threshold of the battery module 111 is 40% of the rated voltage of the battery module 111. Preferably, the first preset energy storage voltage threshold of the battery module 111 is 45% of the rated voltage of the charging apparatus. More preferably, the first preset energy storage voltage threshold of the battery module 111 is 50% of the rated voltage of the charging apparatus. In addition, the first preset energy storage voltage threshold of the battery module 111 is a percentage of the rated voltage of the charging apparatus and can also be implemented as 55%, 60%, 65%, 70%, 75%, 80%, 85%, 90%, 95%, or 100%. The value of the first preset energy storage voltage threshold of the battery module 111 can be selected according to the specific product design, and the present application is not subject to any restriction in this regard.

Further, in step (b.2.2), when the number of charging apparatuses 20 is at least two, the charging apparatuses 20 respectively receive the electric current output by the battery module 111 inside the energy storage power supply 10, and the charging apparatuses 20 are not affected by each other.

Preferably, in step (b.2.2), the magnitude of the electric current at which the charging apparatus 20 is charged by the energy storage power supply 10 can be controlled by the BMS circuit board 115 of the energy storage power supply 10. When the voltage of the charging apparatus 20 is not higher than the second preset charging apparatus voltage threshold, the energy storage power supply 10 outputs the electric current to the charging apparatus 20 at a first charging current. When the voltage of the charging apparatus 20 is not lower than the second preset charging apparatus voltage threshold, the energy storage power supply 10 outputs the electric current to the charging apparatus 20 at a second charging current.

It is worth mentioning that the second preset charging apparatus voltage threshold of the charging apparatus 20 is 70% of the rated voltage of the charging apparatus. Preferably, the second preset charging apparatus voltage threshold of the charging apparatus 20 is 75% of the rated voltage of the charging apparatus. More preferably, the second preset charging apparatus voltage threshold of the charging apparatus 20 is 80% of the rated voltage of the charging apparatus. In addition, the second preset charging apparatus voltage threshold of the charging apparatus 20 is a percentage of the rated voltage of the charging apparatus, which can also be implemented as 85%, 90%, 95% or 100%.

Those skilled in the art should understand that the embodiments of the present application shown in the above description and drawings are only examples and do not restrict the present application. The objects of the present application have been fully and effectively achieved. The functional and structural principles of the present application have been shown and described in the embodiments. Without departing from the principles, the implementation of the present application may be deformed or modified in any way, and different embodiments may be combined.

## Claims

1. An energy storage device, comprising:
an energy storage power supply, which comprises a power supply body and an output portion; wherein the output portion is in circuit connection to the power supply body to output electrical energy stored in the power supply body to the outside; and
charging apparatuses, which are detachably connected to the output portion so as to be charged by the energy storage power supply; wherein the charging apparatuses are configured to be connected to an electrical device to supply power to the electrical device, wherein at least one of the charging apparatuses is replaced, after being depleted of power, with at least another of the charging apparatuses from the energy storage power supply so as to supply power to the electrical device, such that power is continuously supplied to the electrical device by the charging apparatus.

2. The energy storage device of claim 1, wherein the charging apparatus comprises at least one integrated package, which is integrally connected to the output portion, so as to be charged by the energy storage power supply.

3. The energy storage device of claim 2, wherein the integrated package detachably accommodates at least two battery packs, which are connected to the output portion through the integrated package to be charged, wherein the battery packs are detached from the integrated package to supply power to the electrical device.

4. The energy storage device of claim 1, wherein the charging apparatus comprises at least one battery pack, which is directly connected to the output portion, so as to be charged by the energy storage power supply.

5. The energy storage device of claim 1, wherein the output portion comprises a charging connection module, which is in circuit connection to the power supply body to output an electric current; wherein the charging apparatus is connected cordlessly to the charging connection module, so as to obtain the electric current from the power supply body to be charged.

6. The energy storage device of claim 5, wherein the charging apparatus comprises a charging apparatus input portion, which comprises at least one first charging apparatus input power terminal, at least one second charging apparatus input power terminal and at least one charging apparatus input communication terminal; wherein the charging connection module comprises a DC interfacing output unit, which comprises at least one first DC interfacing output power terminal, at least one second DC interfacing output power terminal and at least one DC interfacing output communication terminal; wherein the first charging apparatus input power terminal and the second charging apparatus input power terminal are correspondingly connected to the first DC interfacing output power terminal and the second DC interfacing output power terminal to form a circuit loop, such that the charging apparatus and the energy storage power supply are connected cordlessly, wherein the charging apparatus input communication terminal and the DC interfacing output communication terminal are communicatively connected, such that the charging apparatus and the energy storage power supply communicate with each other.

7. The energy storage device of claim 1, wherein the charging apparatus after being charged by the energy storage power supply is in cordless circuit connection to the electrical device to supply power to the electrical device.

8. An energy storage power supply, comprising:
a power receiving portion, a power supply body and an output portion; wherein the power supply body is in circuit connection to the power receiving portion to obtain and store electrical energy through the power receiving portion, and the output portion is in circuit connection to the power supply body to output the electrical energy stored by the power supply body;
further comprising:
a housing, which comprises a housing body and an accommodating portion; wherein the accommodating portion is disposed in the housing body, and the accommodating portion is configured to accommodate a charging apparatus, such that the charging apparatus is in circuit connection to the output portion and charged.

9. The energy storage power supply of claim 8, wherein the accommodating portion comprises a first accommodating portion and a second accommodating portion; wherein the first accommodating portion and the second accommodating portion are arranged in the housing body; the first accommodating portion is configured to accommodate a battery pack of the charging apparatus; and the second accommodating portion is configured to accommodate an integrated package of the charging apparatus.

10. The energy storage power supply of claim 8, wherein the output portion further comprises at least one integrated output module and a charging connection module; wherein the integrated output module and the charging connection module are respectively in circuit connection to the power supply body; the integrated output module is configured to connect to an electrical device and supply power to the electrical device, and the charging connection module is configured to connect to the charging apparatus and charge the charging apparatus.
